(19) Europäisches Patentamt

European Patent Office

Office européen des brevets

(11) **EP 4 734 012 A1**

(12) **EUROPEAN PATENT APPLICATION**

(43) Date of publication:
**29.04.2026   Bulletin 2026/18**

(21) Application number: **24208364.0**

(22) Date of filing: **23.10.2024**

(51) International Patent Classification (IPC):
*G06N 10/60* *(2022.01)*

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Terra Quantum AG**
**9000 St. Gallen (CH)**

(72) Inventors:
• **KORDZANGANEH, Mohammad**
**9000 St. Gallen (CH)**
• **KYRIACOU, Basil**
**9000 St. Gallen (CH)**
• **MELNIKOV, Alexey**
**9000 St. Gallen (CH)**

(74) Representative: **Lucke, Andreas**
**Boehmert & Boehmert**
**Anwaltspartnerschaft mbB**
**Pettenkoferstrasse 22**
**80336 München (DE)**

(54) **HYBRID QUANTUM-CLASSICAL COMPUTATION SYSTEM AND CORRESPONDING METHOD**

(57)     A computer-implemented method for implementing a hybrid quantum-classical machine learning model including a variational quantum circuit with a first and a second layer comprising preparing a set of computation qubits in a superposition state, constructing the first layer of the variational quantum circuit acting on register qubits and comprising encoding gates and a first conditional variational quantum gate acting on a register qubit according to a first variational parameter conditional on a first quantum state of the computation qubits and a second conditional variational quantum gate acting on the register qubit according to a second variational parameter conditional on a second quantum state of the computation qubits; constructing a second layer acting on the computation qubits and comprising variational quantum gates acting on the computation qubits according to respective second layer variational parameters, obtaining candidate outputs based on a measurable quantum state of the computation qubits; and performing post-selection of the candidate outputs based on the state of the register qubits being in a pre-determined state.

Fig. 4

**Description**

FIELD OF THE DISCLOSURE

The present disclosure relates to a system and method for implementing hybrid quantum-classical machine learning models. Specifically, the present disclosure pertains to the construction and training of variational quantum circuits for solving complex machine learning tasks.

BACKGROUND

Quantum computers provide a platform of controllable quantum mechanical systems whose state and interaction can be controlled in order to perform a computation. The computation is realized by a deterministic evolution of the controllable quantum mechanical systems, e.g. qubits as quantum analogues of classical bits, and the state of the quantum mechanical systems can be measured to determine the outcome of the computation.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In essence, the operation of a quantum computer may be considered to rely on the encoding of a starting state into the internal quantum state of the qubits, followed by a multiplication of the internal quantum state of the qubits with a matrix, which can be implemented by a combination of different quantum gates, and a measurement of the resulting outcome.

In order to compute solutions to problems which are considered intractable on classical computers, a quantum computer can leverage the special properties of quantum mechanical states, in particular the superposition and entanglement of different quantum states, to find solutions with a comparatively low number of calculation steps. Moreover, since the quantum operations can create complex superposition states of the qubits, a quantum computer in principle has access to a large internal memory for processing computational states.

The known approaches effectively implement a Kernel method as discussed by Schuld, M. et al. ("Supervised quantum machine learning models are kernel methods" arXiv preprint arXiv.2101.11020; 2021). Specifically, while such "quantum models" are sometimes called "quantum neural networks", it has been repeatedly noted that their mathematical structure is actually much more closely related to kernel methods: they analyze data in high-dimensional Hilbert spaces, and access to the state is limited to inner products revealed by measurements.

Wiebe et al. (Floating point representations in quantum circuit synthesis, New Journal of Physics 15) disclose techniques for generating small rotations in a computation qubit based on conditional qubit gates applied to ancilla qubits.

SUMMARY OF THE DISCLOSURE

Kernel methods are generally limited to linear manipulations, such that the effective tasks, which can be solved using a corresponding machine learning model may be limited. Moreover, with increasing qubit number and gate number, the increasing complexity of the Hilbert space may further increase the problem of barren plateaus, in which the gradients of a deep, randomly-initialized quantum circuit may decay exponentially with the increasing number of qubits, except for some specific architectures.

It is therefore an object of this disclosure to provide methods that overcome one or more of the disadvantages of known systems.

According to a first aspect, a computer-implemented method for implementing a hybrid quantum-classical machine learning model including a variational quantum circuit comprising a first layer and a second layer to approximate a given labeling function of a set of input features is provided. The method includes preparing a set of computation qubits in a superposition state. The method further includes constructing the first layer of the variational quantum circuit acting on register qubits of a first qubit register, which are different from the computation qubits. The first layer of the variational quantum circuit comprises encoding gates for encoding features of the input features in the quantum states of the register qubits, and variational quantum gates comprising a first conditional variational quantum gate and a second conditional variational quantum gate. The first conditional variational quantum gate acts on one of the register qubits conditional on a first quantum state of the computation qubits and with a parametrized action according to a first variational parameter. The second conditional variational quantum gate acts on the one of the register qubits conditional on a second quantum state of the computation qubits, different from the first quantum state of the computation qubits, and with a parametrized action according to a second variational parameter. The method includes constructing the second layer of the variational quantum circuit acting on the computation qubits in a second qubit register. The second layer comprises a plurality of variational quantum gates acting on the computation qubits according to respective second layer variational parameters. The method includes executing the variational quantum circuit multiple times and measuring, each time, the computation qubits to obtain candidate outputs based on a measurable quantum state of the computation qubits. The method includes measuring the register qubits and performing post-selection of the candidate outputs based on the state of the register qubits being in a pre-determined state to determine a post-selected set of candidate outputs of the variational quantum circuit.

Contrary to the Kernel methods implemented in known systems, the method effectively introduces layered processing of input data, mimicking the architecture of neural networks with hidden layers using quantum computational strategies. Specifically, the conditional application of the conditional variational quantum gates based on different states of the computation qubits can provide a plurality of predictions in the superposition state of the computation qubits, when the register qubits are measured. The second layer may act on the superposition of the predictions, effectively realizing a quantum mechanical multi-layer perceptron analogue, in which the first layer may act as a hidden layer for processing the input features.

Thus, based on the circuit construction of the hybrid quantum-classical machine learning model, the quantum system can be used to overcome inherent shortcomings related to the linearity of unitary transformations used in the prior art to use quantum resources for solving machine learning tasks. This limitation can be overcome by the variational quantum circuit architecture, in particular through the use of conditional quantum gates and the exploit of the collapse of the wavefunction when the register qubits are measured, whose output is not used to construct the candidate output, but to filter executions in which the variational quantum circuit implements the desired operation. As this technique can provide additional hidden layers and construct non-linear activation functions, it can effectively reduce the number of qubits and variational parameters to fit complex task profiles with a quantum computation system, allowing to improve the hardware utilization for these tasks through a different quantum circuit architecture.

The first variational parameter, the second variational parameter, and the second layer variational parameters may be selected to approximate the given labeling function based on the post-selected set of candidate outputs for the set of input features, in particular based on an iterative training algorithm of the hybrid quantum-classical machine learning model. For example, the post-selected candidate outputs for a given set of input features maybe compared to a target output of the labeling functions, e.g. through a loss function, such as a mean squared error function, and the first variational parameter, the second variational parameter, and the second layer variational parameters may be iteratively updated as machine learning parameters of the variational quantum circuit based on the loss function, e.g. based on a gradient of the loss function such that the hybrid quantum classical machine learning model approximates the labelling function.

The trainable parameters may be updated with known techniques employed in classical machine learning, such as gradient based optimization algorithms, e.g. stochastic gradient descent or adaptive moment estimation, or gradient free optimization, such as simulated annealing. Preferably, the optimization algorithm is gradient based, and the method may comprise determining a gradient of the trainable parameters with respect to the loss attributed to the output label by the loss function.

In some examples, the method is for providing the hybrid quantum classical machine learning model and further includes training the hybrid quantum-classical machine learning model to approximate the given labeling function based on the post-selected set of candidate outputs for the set of input features by iteratively optimizing machine learning parameters of the variational quantum circuit including the first variational parameter, the second variational parameter, and the second layer variational parameters.

For one execution of the variational quantum circuit, the set of computation qubits may be prepared in a superposition state by single- or multi-qubit operations, e.g. by applying a Hadamard operation to each of the computation qubits for preparing equal superpositions of up/down (0/1) states, and different quantum states of the computation qubits in superposition may control the application of corresponding conditional variational quantum gates of the first layer.

The first layer of the variational quantum circuit comprises encoding gates for encoding features of the input features in the quantum states of the register qubits. Encoding gates can map classical data into quantum states, enabling the quantum circuit to process classical information in a quantum mechanical framework. The state encoding may be performed by state rotations, e.g. single qubit rotations proportional to the value of the feature in the classical data. In some examples, the values in the input features are repeatedly encoded in the qubits, e.g. with scaling factors, to more efficiently use the available Hilbert space when encoding, effectively increasing the expressivity of the quantum encoding.

The first layer also includes conditional variational quantum gates, specifically a first conditional variational quantum gate and a second conditional variational quantum gate. The conditional application of these gates allows for a plurality of predictions in the state of the computation qubits when the register qubits are measured. This conditional operation can introduce non-linearity and variability into the quantum circuit, such as to approximate complex functions. The parametrized actions according to the first and second variational parameters enable fine-tuning of the action of the quantum gates to solve a machine learning task implied by the labelling function, in a manner analogous to weights of classical machine learning models as corresponding machine learning parameters. The variational quantum circuit can be provided alongside a set of trained machine learning parameters including the first and second variational parameters, and the second layer variational parameters, such that the post-selected output approximates the labelling function when the input features are encoded in the quantum states of the register qubits using the encoding gates.

A conditional variational quantum gate, conditional on a certain quantum state, applies the respective parametrized action on the target qubit state (e.g. one of the register qubits) only if the control qubits are in the certain quantum state. The control qubits may be a single one or multiple of the computation qubits, and the certain quantum state may be a pre-defined quantum state of the control qubits, such as $|00...0>$, or $|10...0>$. The parametrized action on the target qubit state may be a quantum state rotation of a register qubit of the first qubit register. Thus, based on the first quantum state of the one of the computation qubits, the quantum state of the register qubits is modified according to the action of the first variational quantum gate, for example rotated by an angle based on (e.g. proportional to) the first variational parameter. In the case of the one of the computation qubits featuring the second quantum state, the quantum state of the register qubits is modified according to the action of the second variational quantum gate, whose action is parametrized by the second variational parameter, which is generally different from the first variational parameter. The register qubits can be considered to act similarly to the ancilla qubits of the gear box qubit rotation circuit proposed by *Wiebe et al.,* by imprinting functions of the quantum gate action on the register qubit in the computation qubit.

However, since the computation qubits are initially prepared in a superposition state, the quantum states of the computation qubits may be effectively influenced by both conditional variational quantum gates, at least prior to measurement, with the different states of the computation qubits being associated with different predictions corresponding to the respective conditional variational gates of the first layer encoded in a superposition state of the computation qubits.

In some examples, the first qubit register comprises a plurality of register qubits, wherein the first layer comprises a first conditional quantum gate for each of the register qubits with a respective individually variable first variational parameter.

Where the first register includes more than one qubit, the first conditional variational quantum gate and the second conditional variational quantum gate may act on the states of multiple qubits. For example, the first conditional variational quantum gate and the second conditional variational quantum gate may be composed of a conditional multi-qubit gate or multiple conditional variational quantum gates acting on different register qubits, but which are conditional on the same quantum state of the computation qubits. Each of the conditional variational quantum gates may further be constructed from multiple gates, such as a combination of conditional qubit manipulations with the control qubit(s) being one or more of the computation qubits, and the target qubits being multiple of the register qubits, as well as single qubit gates parametrized based on the respective variational parameter. The action of the first conditional variational quantum gate and the second conditional variational quantum gate can each comprise different actions on different register qubits, and can be associated with respective first/second variational parameters for different register qubits.

In some examples, the first quantum state and/or the second quantum state of the computation qubits is a quantum state of a plurality, in particular all, computation qubits.

A number of N computation qubits in principle span a number of $2^N$ computational basis states (e.g. for two computation qubits the computational basis states can be $|00>$, $|10>$, $|01>$, and $|11>$), which can each be associated with a different prediction based on the action of the first layer, when the qubits of the first qubit register are measured. It may therefore be considered that for each computational basis state used as a condition to apply a conditional variational qubit gate, the first layer encodes one input feature to be processed by the second layer. If the state of multiple computation qubits is used to control the action of the conditional variational quantum gates, the variational quantum circuit can benefit from the exponentially increasing number of computational states associated with multiple control qubits, and accordingly increasing number of predictions to be processed by the second layer for representing complex labelling functions. Thus, the gate's application may be contingent upon the combined quantum state of all computation qubits, rather than the state of individual computation qubits. In some examples, the first conditional variational quantum gate is conditionally applied based on the state of all computation qubits.

In some examples, the first quantum state and/or the second quantum state differs in the quantum state of at least one of the computation qubits.

In some examples, the first layer comprises a plurality of conditional variational quantum gates acting on the one of the register qubits conditional on an associated quantum state of the computation qubits, wherein for each of the conditional variational quantum gates, the associated quantum state is different.

Each conditional variational quantum gate may be triggered by a distinct quantum state of the computation qubits, ensuring that the action on the register qubits varies according to the state of the computation qubits. In some examples, the number of conditional variational quantum gates is equal to the number of computational basis states spanned by the computation qubits.

In some examples, the encoding gates are interlaced between the conditional variational quantum gates.

The encoding gates may be organized in layers, wherein each layer of encoding gates may comprise encoding gates for each register qubit of the first register. The interlacing of encoding gates and conditional variational quantum gates may enhance the encoding process by allowing more complex feature mappings and interactions between encoded features and variational parameters. This configuration may improve the model's ability to approximate the given labeling function by providing a richer and more flexible representation of the input features.

The first layer may also comprise entangling gates, which may entangle the state of the register qubits, e.g. through multi-qubit gates, such as the CNOT gate, to further increase the state space for encoding and manipulating the original input data in the Hilbert space of the variational quantum circuit.

The first layer may comprise a sequence of blocks each comprising conditional variational quantum gates, encoding gates, and entangling gates, for providing a complex encoding of the input features in the Hilbert space of the qubits of the first qubit register. Each block may comprise both the first and the second conditional variational quantum gates and may be considered a sub-layer of the first layer.

The second layer of the variational quantum circuit comprises a plurality of variational quantum gates acting on the computation qubits according to respective second layer variational parameters. This second layer may act on the superposition of the predictions encoded in the computation qubits through the action of the first layer and the measurement of the qubits of the first register, effectively realizing a quantum mechanical multi-layer perceptron analogue with multiple concatenated ("neuron") layers. This multi-layer structure may allow the quantum model to learn and represent more complex patterns and relationships within the data.

The second layer may include a variational quantum circuit acting on the quantum states of the computation qubits based on variational parameters different from the variational parameters of the first layer. The second layer may not act on the qubits of the first qubit register.

The second layer may also feature a multi-tiered structure according to the first aspect, e.g. a first and a second layer including corresponding qubit registers with computation and register qubits, to implement further "hidden layers", e.g. 2 or 3 hidden layers. In that case, the computation qubits become the register qubits of the next hidden layer of the multi-tiered structure, and further computation qubits may be added to generate an output of the variational quantum circuit.

Measuring the register qubits and performing post-selection of the candidate outputs based on the state of the register qubits being in a pre-determined state may filter out irrelevant or suboptimal solutions. This post-selection process may limit the candidate outputs to realization in which the first layer affects the state of the computation qubits in a complex manner, enhancing the efficiency and effectiveness of the model training process. By iteratively optimizing the machine learning parameters of the variational quantum circuit, the model can progressively improve its performance and accuracy in approximating the given labeling function.

In some examples, the first qubit register comprises a plurality of register qubits, and the post-selection of the candidate outputs based on the state of the register qubits being in a pre-determined state is based on the measured state on a plurality of register qubits. In respective embodiments, the post-selection of the candidate outputs may be based on the measured state on all register qubits.

It was found that it is sufficient to post-select based on a subset of measured outputs for the register qubits. However, the labelling function may be approximated more accurately, if the post-selection is based on all of the qubits of the first register and acted on by the first layer being in a certain state, such as a computational basis state of multiple or all register qubits |00...0>.

In some examples, the variational quantum circuit further comprises a third layer, and the method comprises constructing the third layer of the variational quantum circuit acting on second register qubits of a third qubit register, wherein the third layer of the variational quantum circuit comprises encoding gates for encoding the features of the input features in the quantum states of the second register qubits, and variational quantum gates comprising a third conditional variational quantum gate and a fourth conditional variational quantum gate, the third conditional variational quantum acting on one of the second register qubits conditional on the first quantum state of the computation qubits and with a parametrized action according to a third variational parameter, and the fourth conditional variational quantum gate acting on the one of the second register qubits conditional on the second quantum state of the computation qubits, different from the first quantum state of the computation qubits, and with a parametrized action according to a fourth variational parameter.

The third layer comprises encoding gates that encode the features of the input features into the quantum states of the second register qubits. The encoding gates may mirror the encoding gates of the first layer, and may in particular be identical to the encoding gates of the first layer.

The third and fourth conditional variational quantum gates act on one of the second register qubits based on the first and second quantum states of the computation qubits, respectively, i.e. conditional on the same state as the first and second conditional variational quantum gates. The third and fourth conditional variational quantum gates act may be applied in parallel to the first and second conditional variational quantum gates. The third conditional variational quantum gate is parametrized according to a third variational parameter, while the fourth conditional variational quantum gate is parametrized according to a fourth variational parameter. The third and fourth variational parameters may be different from or identical to the first and second variational parameters.

In some examples, the third variational parameter is equal to the first variational parameter, and the fourth variational parameter is equal to the second variational parameter.

When the first (second) and the third (fourth) variational parameters are identical, the combination of the first and third layer may effectively create a polynomial (quadratic) activation based on the first/second variational parameter, when the first register qubits and the second register qubits are measured in the quantum state of the computation qubits, on which the second layer may act. At the same, time the number of variational parameters to be optimized can be kept lower.

In some examples, the first layer and the second layer are identical layers acting on different sets of register qubits in parallel, while their respective conditional variational quantum gates are conditional on the same states of the computation qubits.

The conditional variational quantum gates act on the register qubits based on the quantum state of the computation qubits, e.g. through conditional gates applied to the register qubits with the computation qubits acting as the control qubits of the respective conditional gate. The conditional variational quantum gates may be applied prior to the second layer acting directly on the quantum state of the computation qubits.

In some examples, the state of the computation qubits controls the application of the conditional variational quantum gates prior to the application of the second layer to the quantum state of the computation qubits.

Specifically, the computation qubits may be prepared in superposition states, e.g. of all computational basis states of the computation qubits, that conditionally control the actions of the variational quantum gates acting on the register qubits. This control may be exerted before the second layer of the variational quantum circuit is applied to the computation qubits, ensuring that the conditional variational quantum gates are applied based on the specific quantum states of the computation qubits before any further operations on the computation qubits are performed by the second layer.

In other words, the second layer may act on the computation qubits after the state of computation qubits has controlled the conditional application of the first conditional variational quantum gate and the second conditional variational quantum gate on the register qubits of the first qubit register.

In some examples, the first layer further comprises entangling gates entangling the states of the register qubits between the application of the first conditional variational quantum gate and the second conditional variational quantum gate. In addition, the second layer may further comprise entangling gates entangling the states of the computation qubits.

In some examples, the second layer does not include encoding gates. In this case, the second layer may focus solely on the variational quantum gates acting on the computation qubits, without the need to encode features of the input features in the quantum states of the computation qubits, mimicking the action of a hidden layer in a classical neural network. However, in other examples, the second layer may also comprise encoding gates.

According to a second aspect, a hybrid quantum-classical computation system for approximating a given labeling function of a set of input features is provided. The hybrid quantum-classical computation system comprises a first qubit register comprising register qubits. The hybrid quantum-classical computation system comprises a second qubit register comprising computation qubits different from the register qubits. The hybrid quantum-classical computation system comprises a variational quantum circuit comprising a first layer, a second layer, and a computation initialization layer. The computation initialization layer prepares the computation qubits of the second qubit register in a superposition state. The first layer of the variational quantum circuit acts on the register qubits of the first qubit register. The first layer of the variational quantum circuit comprises encoding gates for encoding features of the input features in the quantum states of the register qubits. The first layer of the variational quantum circuit comprises variational quantum gates comprising a first conditional variational quantum gate and a second conditional variational quantum gate. The first conditional variational quantum gate acts on one of the register qubits conditional on a first quantum state of the computation qubits and with a parametrized action according to a first variational parameter. The second conditional variational quantum gate acts on the one of the register qubits conditional on a second quantum state of the computation qubits, different from the first quantum state of the computation qubits, and with a parametrized action according to a second variational parameter. The second layer comprises a plurality of variational quantum gates acting on the computation qubits according to respective second layer variational parameters. The hybrid quantum-classical computation system is configured to execute the variational quantum circuit multiple times and measure, each time, the computation qubits to obtain candidate outputs based on a measurable quantum state of the computation qubits. The hybrid quantum-classical computation system is configured to obtain a measurement result of the register qubits and perform post-selection of the candidate outputs based on a measured state of the register qubits being in a pre-determined state to determine a post-selected set of the candidate outputs of the variational quantum circuit.

The first qubit register comprises register qubits. These qubits serve as the primary computational units for encoding and processing the input features. The second qubit register comprises computation qubits different from the register qubits, and whose state is used to determine the candidate output in the end.

The variational quantum circuit comprises a first layer, a second layer, and a computation initialization layer.

The first layer of the variational quantum circuit acts on the register qubits of the first qubit register. This layer comprises encoding gates for encoding features of the input features in the quantum states of the register qubits. Encoding gates are responsible for mapping classical data into quantum states. The first layer of the variational quantum circuit also comprises variational quantum gates, including a first conditional variational quantum gate and a second conditional variational quantum gate. The first conditional variational quantum gate acts on one of the register qubits conditional on a first quantum state of the computation qubits and with a parametrized action according to a first variational parameter. The second conditional variational quantum gate acts on the same register qubit conditional on a second quantum state of the computation qubits, different from the first quantum state, and with a parametrized action according to a second variational parameter. These conditional variational quantum gates allow the system to apply different operations based on the state of the computation qubits, providing a mechanism for implementing complex, state-dependent transformations. The computation initialization layer prepares the computation qubits of the second qubit register in a superposition state. The superposition state allows the computation qubits to represent multiple possible outcomes based on the conditional application of the conditional variational quantum gates.

The second layer comprises a plurality of variational quantum gates acting on the computation qubits according to respective second layer variational parameters. This layer further processes the quantum states, allowing for additional transformations and refinements. By acting on the computation qubits, the second layer can leverage the superposition of predictions generated in the first layer, effectively realizing a quantum mechanical analogue of a multi-layer perceptron. This multi-layer structure enhances the system's ability to learn and approximate complex functions, addressing the limitations of linear transformations inherent to kernel methods.

The hybrid quantum-classical computation system is configured to execute the variational quantum circuit multiple times and measure, each time, the computation qubits to obtain candidate outputs based on a measurable quantum state of the computation qubits.

The system is also configured to obtain a measurement result of the register qubits and perform post-selection of the candidate outputs based on a measured state of the register qubits being in a pre-determined state. This post-selection process helps to filter out irrelevant outputs. By focusing on a post-selected set of candidate outputs, the system can achieve higher precision and reliability in its predictions.

Finally, the processing system can be configured to train the hybrid quantum-classical machine learning model to approximate the given labeling function based on the post-selected set of candidate outputs for the set of input features. This training involves iteratively optimizing machine learning parameters of the variational quantum circuit, including the first variational parameter, the second variational parameter, and the second layer variational parameters. Iterative optimization allows the system to fine-tune its parameters, continually improving its performance and accuracy, such that the system can effectively learn from the input data and make accurate predictions.

In some examples, the system is further configured to communicate the variational quantum circuit to a quantum computing system for executing the variational quantum circuit on quantum hardware.

The specific mechanisms of communication between components may include data transmission protocols, network interfaces, and communication buses that facilitate the transfer of the variational quantum circuit from the hybrid quantum-classical computation system to the quantum computing system. The variational quantum circuit may be communicated in terms of its architecture and/or its (updated) parameters, such as variational parameters, input features, etc.

In some examples, the hybrid quantum-classical computing system may further comprise quantum computing hardware. The hybrid quantum-classical computing system is configured to receive an implementation of the variational quantum circuit from a processing system, implement the implementation in the quantum computing hardware, and receive the measurement result from the quantum computing hardware.

The processing system may transmit the implementation of the variational quantum circuit to the quantum computing hardware through a communication protocol. The quantum computing hardware then executes the implementation and sends the measurement result back to the processing system. Thus, quantum computing hardware may be integrated into the hybrid quantum-classical computing system, allowing for the physical realization and execution of the variational quantum circuit.

The processing system may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

According to a third aspect, the invention relates to a non-transitory medium comprising machine-readable instruction, which, when executed by a processing system, implement a method according to the first aspect and/or a system according to the second aspect.

LIST OF FIGURES

Figure 1: schematically illustrates an example of a hybrid quantum-classical computation system for implementing and driving a variational quantum circuit.

Figure 2: schematically illustrates another example of a hybrid quantum-classical computation system for implementing and driving a variational quantum circuit.

Figure 3a: schematically illustrates a correspondence between a variational quantum circuit and a corresponding kernel method.

Figure 3b: schematically illustrates a mapping from input data in an input data space with two sample classes illustrated with circles/squares to a mapped space and the classification of the samples through a measurement hyperplane (m).

Figure 4: schematically illustrates an example of a variational quantum circuit with multiple layers implementing a superposed parameterized quantum circuit (SPQC) architecture.

Figure 5: schematically illustrates an example of a variational quantum circuit with multiple layers implementing a quadratic activation function for the first layer.

Figure 6: schematically illustrates a flowchart of a method for implementing a hybrid quantum classical computation system according to an example.

Figure 7: schematically illustrates an example of a variational quantum circuit with multiple layers implementing a quadratic activation function for the first layer.

Figure 8: schematically illustrates another example of a variational quantum circuit with multiple layers implementing a quadratic activation function and multiple concatenated sub-layers for the first layer implementing a data re-uploading strategy.

Figure 9a: schematically illustrates an implementation of the first layer of a variational quantum circuit with multiple layers according to an example.

Figure 9b: schematically illustrates an implementation of the second layer of a variational quantum circuit with multiple layers according to an example.

Figure 10a: schematically illustrates another example of a variational quantum circuit with multiple layers implementing a quadratic activation function and multiple concatenated sub-layers for the first layer implementing a data re-uploading strategy with two qubits.

Figure 10b: schematically illustrates another example of a variational quantum circuit with multiple layers implementing a linear activation function and multiple concatenated sub-layers for the first layer implementing a data re-uploading strategy with two qubits.

Figure 11: illustrates a sample dataset utilized for experiments with two different object classes distributed in two dimensions inside and outside a star shape; the dataset consists of 5000 datapoints $(x, y)$, where the x and y axes range from $[-\pi, \pi)$, and the labels for the dataset are $\pm 1$, illustrated with square and circular markers, respectively.

Figure 12a: illustrates an MSE loss plot over 5,000 epochs for four SPQC models, with changing number m of qubits in layer 1.

Figure 12b: illustrates functional fits associated with each of the four trained SPQC models, with the circles indicating 100 one-dimensional data points representing a classification problem, and the solid lines showing the fit of the relevant SPQC models to this dataset.

Figure 13a: illustrates a comparison of a learning process for SPQC models with m = 4 qubits in the layer 1 with linear and quadratic activation functions on a star dataset with the "measure all" strategy.

Figure 13b: illustrates a comparison of a learning process for SPQC models with m = 3 qubits in the layer 1 with linear and quadratic activation functions on a star dataset with the "measure all" strategy.

Figure 14a: illustrates a comparison of a learning process for SPQC models with linear activation function and m = 4 qubits in the layer 1 with 'measure all' and with 'measure one' strategies on a star dataset.

Figure 14b: illustrates a comparison of a learning process for SPQC models with quadratic activation function and m = 4 qubits in the layer 1 with 'measure all' and with 'measure one' strategies on a star dataset.

Figure 15a: illustrates a comparison of a learning process for SPQC models with m = 4 qubits in the layer 1 with linear and quadratic activation functions on a star dataset with the measure one strategy.

Figure 15b: illustrates a comparison of a learning process for a smaller SPQC model with m = 3 qubits in the layer 1 with linear and quadratic activation functions on a star dataset with the measure one strategy.

Figure 16: illustrates a decisioning flowchart of a method for determining an SPQC architecture, according to an example.

DESCRIPTION OF EXAMPLES

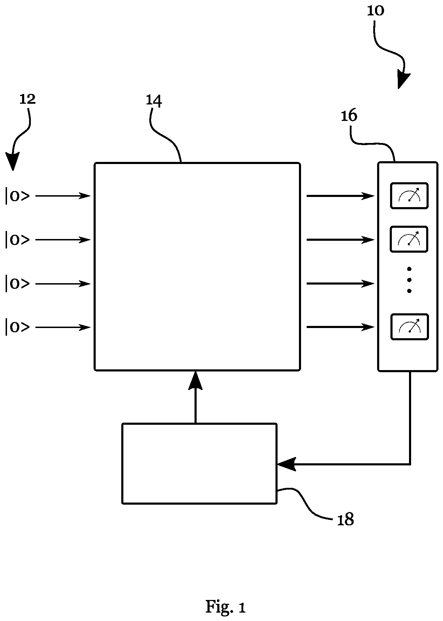

Fig. 1 schematically illustrates an example of a hybrid quantum-classical computation system 10 for implementing and driving a variational quantum circuit, according to a schematic quantum circuit diagram. The schematic quantum circuit diagram depicts an evolution of quantum states from left to right for an exemplary number of computation qubits, wherein control operations on the qubits can be arranged along lines of qubit state evolution to indicate an architecture or time-sequence associated with the quantum circuit. The skilled person will appreciate that additional coherent operations may be included as part of the quantum circuit, and the quantum circuit may be extended to an arbitrary number of qubits. Further, although reference may be made to specific control operations in the following description, the skilled person will appreciate that different control operations may be used to implement the system and methods of the present disclosure, e.g. depending on the physical representation of the qubits.

The illustrated system 10 of Fig. 1 comprises a qubit register 12 comprising a plurality of computation qubits, which is exemplarily shown to consist of multiple qubits initialized in the state $|0\rangle$. These qubits serve as the primary quantum bits for the computation process. A plurality of quantum gates 14 may act on the computation qubits of the qubit register 12 to perform a computation/controlled evolution, wherein variable actions of the plurality of quantum gates 14 may be parametrized by variational parameters. The outcome of the computation may be measured by a measurement sensor 16 which projects the states of the computation qubits onto the computational basis states of the hybrid quantum-classical computation system 10. The outcome can be received by a control system 18.

The control system 18 may be configured to repeatedly perform a computation sequence. The computation sequence may comprise initializing the computation qubits of the qubit register 12 before each computation, such as into the ground state of each computation qubit, e.g. to form an initial state of the computation qubits of |00...0>. The initialization of the computation qubits into their respective ground state may in some examples comprise a relaxation process, and the initialization of the computation qubits may not require active control of the computation qubits.

The control system 18 may then apply the plurality of quantum gates 14 to the computation qubits of the qubit register 12 to drive a coherent evolution of the computation qubits. The control system 18 may optionally produce superposition states of all computation qubits, e.g. by applying a Hadamard gate to the computation qubits, and may subsequently apply the plurality of quantum gates 14 including variational quantum gates with the variable actions.

In variational quantum circuits, the action of at least some of the quantum gates in the variational quantum circuit is parametrized, such that a measured output of the computation qubits is a function of variational parameters parametrizing variable actions of the variational quantum gates, such as a rotation angle. The combined action of the at least partially parametrized quantum gates may be termed a variational quantum circuit.

Following the coherent evolution, the state of the computation qubits in the qubit register 12 may be measured with the sensor 16. The measurement sensor 16 may be a plurality of single qubit state detectors for measuring the state of each computation qubit following the evolution according to the plurality of quantum gates 14. Repeating the measurement may allow determining the probability of each measurement outcome and the result may be employed for assigning a label to an input vector of features. On the basis of the measured output, the control system 18 can classically calculate an "energy"/ "cost"/ "loss" of the label with a cost/loss function based on a labeling task. The labeling task may be specified according to a function, which assigns a loss to the measured output or the label derived therefrom, or may be specified according to pairs of sample input vectors of features and sample labels, e.g. as points of training data representing a labeling function, wherein the loss may be based on a difference between the output label and the sample label.

Conventionally, the control system 18 may repeat the computation sequence with adjusted variable actions based on the outcome, such as to progressively improve the quality of an output label associated with the measured outcome. For example, the control system 18 may repeat the computation sequence with adjusted operation parameters for the variational quantum gates in order to determine a gradient or energy landscape associated with the plurality of quantum gates 14 from the measured outcomes and may update the variational parameters based on the estimated gradient in order to progressively adjust the variational quantum circuit towards an improved solution.

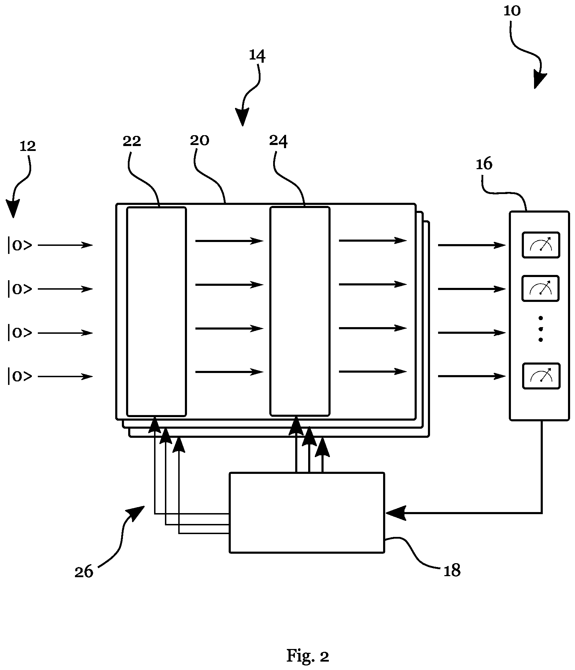

Fig. 2 illustrates another general example of a hybrid quantum-classical computation system 10 for implementing and driving a variational quantum circuit. The system 10 comprises a qubit register 12 comprising a plurality of computation qubits. A plurality of quantum gates 14 are arranged in layers of quantum gates 20, which may act on the computation qubits of the qubit register 12 in sequence to perform a computation. Each layer of quantum gates 20 can comprise an encoding layer 22 and a variational layer 24, wherein the variational layer 24 comprises a plurality of variational quantum gates whose actions may be parametrized by different variational parameters in each layer of quantum gates 20. The encoding layer 22 comprises a plurality of encoding gates whose action is parametrized based on values of an input vector of features to be labeled according to a given labeling task. The encoding layer 22 in different layers of quantum gates 20 may be based on different sub-vectors 26 of the input vector of features, such that different layers of quantum gates 20 may encode different values of the input vector of features into the states of the computation qubits. Each layer of quantum gates 20, e.g. as part of each variational layer 24, may comprise multi-qubit gates for entangling the states of different computation qubits of the qubit register 12, such as a plurality of CNOT gates, as entangling gates for entangling quantum states of at least two qubits of the computation qubits.

The application of the variational layer 24 to the states of the computation qubits 24 after the action of the encoding layer 22 may prepare the quantum states of the computation qubits for the encoding of a different feature of the input vector of features in the next layer of quantum gates 20, or for encoding the same feature multiple times, optionally with a scaling factor applied to the value of the feature.

To encode the values of the input vector of features into the quantum Hilbert space, the "angle embedding" method can utilized, which involves rotating the respective qubit around an axis, such as the Z-axis (it can also be the X or Y-axis) on the Bloch sphere by an angle proportional to a value corresponding the respective feature.

The subsequent application of a plurality of layers of quantum gates to the qubits may form the variational quantum circuit, with the variational quantum circuit being parametrized by variational parameters for each layer. Each layer of quantum gates may comprise an entangling gate for each of the computation qubits, such as to create a superposition state of the computation qubits. In some examples, each layer of quantum gates is configured to entangle the states of each computation qubit with at least one other qubit of the computation qubits. In some examples, each layer comprises a plurality of entangling gates to create a superposition state of all the computation qubits.

The outcome of the computation may be measured by a measurement sensor 16 after all layers of quantum gates 20 have acted on the computation qubits, wherein the measurement sensor 16 may project the states of the computation qubits onto the computational basis states of the hybrid quantum-classical computation system 10. Based on a measured output, which may be determined based on a measurement outcome obtained with the measurement sensor 16 or based on the measurement outcomes obtained with the measurement sensor 16 in multiple repetitions of applying the variational quantum circuit to the computation qubits, the control system 18 may determine an output label for labeling the input vector of features according to the given labeling task. Measuring the computation qubits multiple times may allow determining probabilities of measuring each of the computational basis states of the qubits for the quantum state produced by the application of the plurality of quantum gates.

The variational parameters should be optimized for predicting an optimal output label for the input vector of features in view of the labeling task according to a training algorithm, which may be an iterative process of updating the variational parameters, e .g. according to an estimated gradient of the variational parameters associated with the plurality of quantum gates 14.

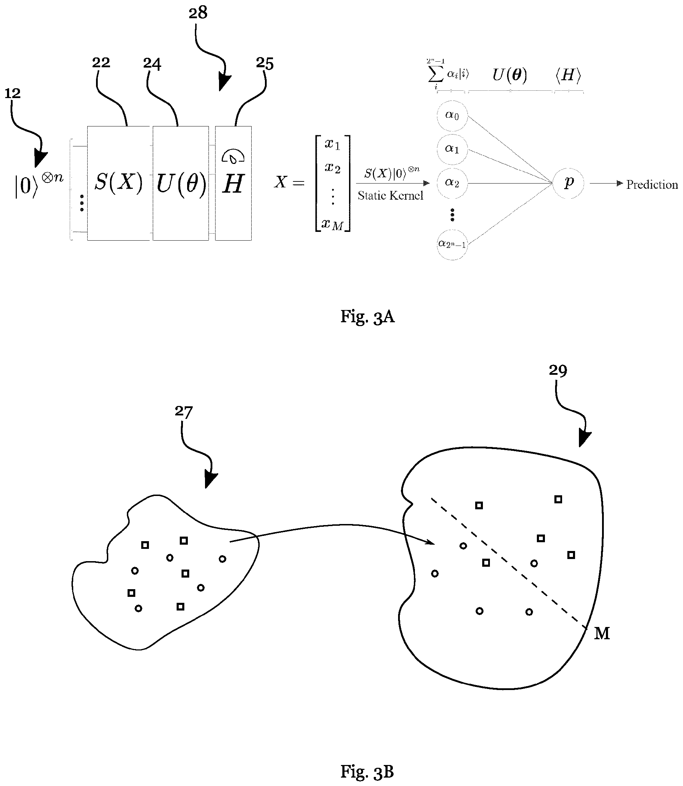

Figure 3A illustrates a schematic representation of a conventional variational quantum circuit (VQC) 28 and its correspondence to a classical kernel method. The variational quantum circuit 28 comprises a qubit register 12 initialized to the state $|0\rangle^{\otimes n}$, an encoding layer 22 denoted as S(X), mapping the classical input data X onto the quantum state, a variational layer 24 represented as a unitary action U($\theta$) based on variational parameters $\theta$, and a measurement Hamiltonian 25 denoted as H corresponding to the measurement of the state of the qubits. The variational layer 24 U($\theta$) applies parameterized quantum gates to the encoded quantum state corresponding to the input features X, modifying it based on the variational parameters $\theta$, while the measurement Hamiltonian 25 is then applied to the quantum state, and the expectation value of this state is measured to obtain a prediction.

The right side of the figure illustrates the correspondence to a classical kernel method, where the input data X is mapped to a high-dimensional space using the static kernel, and the variational layer $U_\theta$ acts as a trainable hyperplane in this space. The prediction p is obtained by measuring the expectation value of the quantum state in the H basis.

Specifically, the figure shows a mathematical representation of the input data X, which can be represented as a vector comprising elements $x_1$, $x_2$, ..., $x_M$. The static kernel $S(X)|0\rangle^{\otimes n}$ maps the input data to a high-dimensional quantum state. The variational layer $U(\theta)$ then acts on this quantum state, and the measurement Hamiltonian H is used to obtain the prediction p.

Figure 3B schematically illustrates a corresponding mapping from input data (e.g. the input features X) in an input data space 27 to a mapped space 29 and the classification of the samples through a measurement hyperplane M. The input data space 27 contains data points represented by circles and squares, indicating different classes for the respective data points. The mapping process transforms these data points into a higher-dimensional mapped space 29, where the data points may be more easily separable. In the mapped space 29, a measurement hyperplane M is used to classify the data points into different classes. The dashed line represents the hyperplane M, which separates parts of the mapped space for the goal of successful classification into circles and squares.

For linear functions, using a variational quantum circuit 28, classical input data may therefore be mapped to a high-dimensional quantum state, and after applying parameterized quantum gates to modify the state, a measurement Hamiltonian can be used to obtain predictions for the classification of the input features according to a pre-defined machine learning task. However, the correspondence between the input features and the classification result may rely on linear transformations of the input features and may therefore be insufficient for complex machine learning tasks.

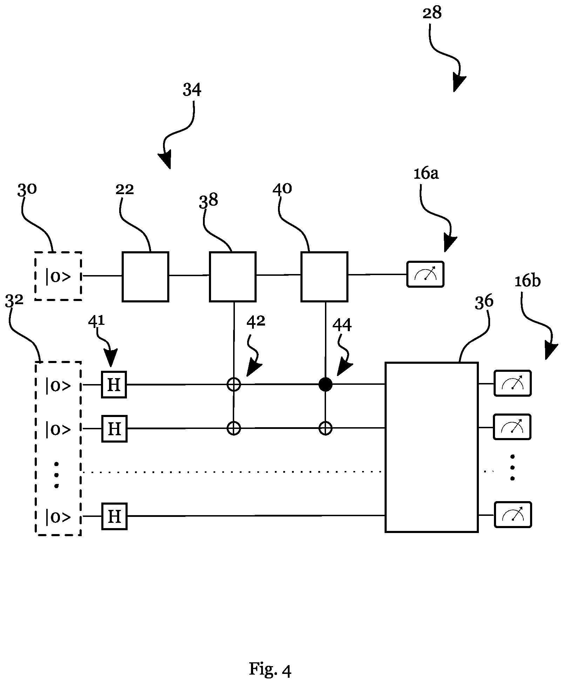

Figure 4 illustrates an example of a variational quantum circuit 28 with multiple layers 34, 36. The variational quantum circuit 28 comprises a first qubit register 30 and a second qubit register 32, whose qubits are initialized in the state $|0\rangle$. The first layer 34 of the variational quantum circuit 28 acts on the register qubits of the first qubit register 30. This layer includes encoding gates 22 for encoding the input features into the quantum states of the register qubits. Following the encoding gates 22, the first layer 34 comprises a first conditional variational quantum gate 38 and a second conditional variational quantum gate 40. In parallel, the computation qubits of the second qubit register 32 are prepared in superposition states using Hadamard gates 41 applied to each of the computation qubits.

The first conditional variational quantum gate 38 acts on one of the register qubits conditional on a first quantum state 42 of the computation qubits. The second conditional variational quantum gate 40 acts on the same register qubit conditional on a second quantum state 44 of the computation qubits, which is different from the first quantum state 42. These conditional gates are parametrized according to respective variational parameters, which are generally different machine learning parameters to be optimized when training a corresponding hybrid quantum classical computation system 10. In the illustrated example, the first conditional variational quantum gate 38 is applied when the first and the second computation qubits of the second qubit register 32 are both in the ground state |0>, while the second conditional variational quantum gate 40 is applied when the first computation qubit of the second qubit register 32 is in the excited state (e.g. |1>) and the second computation qubit of the second qubit register 32 is in the ground state (e.g. |0>).

After the first conditional variational quantum gate 38 and the second variational condition quantum gate 40 have acted on the register qubit of the first qubit register 32 conditional on the first quantum state 42 and the second quantum state 44 of the computation qubits, respectively, the second layer 36 of the variational quantum circuit 28 acts on the computation qubits in the second qubit register 32. The second layer 36 comprises a plurality of variational quantum gates 14 acting on the computation qubits according to respective second layer variational parameters, which are generally different machine learning parameters with respect to the variational parameters parametrizing the action of the variational gates 38, 40 in the first layer 34.

Measurement sensors 16a and 16b are used to measure the states of the register qubits and the computation qubits, respectively. The measurement results from the computation qubits are used to obtain candidate outputs based on a measurable quantum state of the computation qubits. The register qubits are measured, and post-selection of the candidate outputs is performed based on the state of the register qubits being in a predetermined state. This post-selection determines a post-selected set of candidate outputs of the variational quantum circuit 28. For example, all results may be discarded, in which (all of) the register qubits are not in the ground state. The measurement and postelection of the register qubit may effectively produce a superposition of different predictions in the states of the computation qubits prior to the application of the second layer 36, which may implement a multilayered quantum circuit based machine learning model.

For approximating a given labeling function of a set of input features, the machine learning parameters may be optimized in a training process, by iteratively optimizing machine learning parameters, including the first variational parameter, the second variational parameter, and the second layer variational parameters.

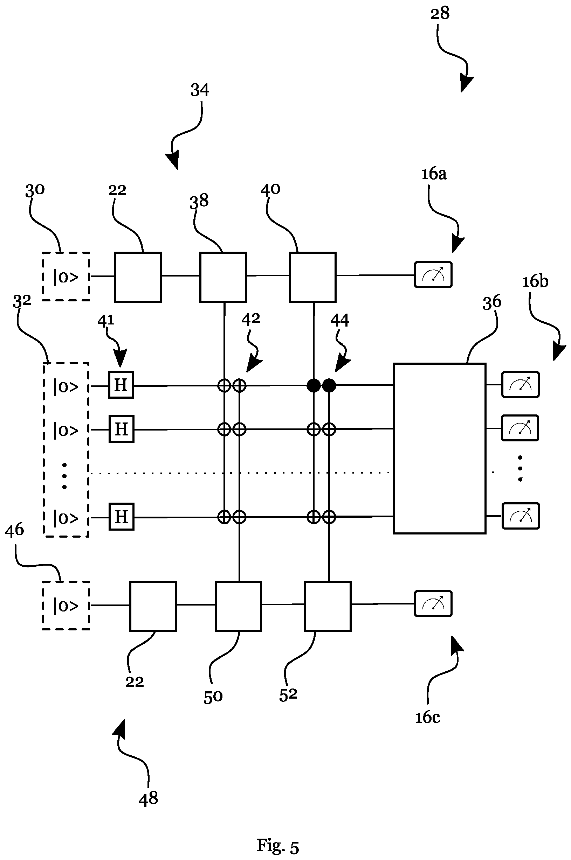

Figure 5 illustrates an example of a variational quantum circuit 28 comprising multiple layers, specifically implementing a quadratic activation function for the first layer 34. The example of Fig. 5 is similar to the example illustrated in Fig. 4 and a description of corresponding sections of the circuit will not be repeated in detail. The variational quantum circuit 28 is configured to operate on the qubits of three qubit registers, a first qubit register 30, a second qubit register 32, and a third qubit register 46. In illustrated example, all qubits in the registers 30, 32, 46 are initially initialized in the state $|0\rangle$.

The first layer 34 is configured identically as in Fig. 4, and includes encoding gates 22 for encoding features of the input data into the quantum states of the register qubits in the first qubit register 30. Following the encoding gates 22, the first layer 34 comprises a first conditional variational quantum gate 38 and a second conditional variational quantum gate 40. These gates 38, 40 act on the register qubits conditional on the quantum states 42, 44 of the computation qubits in the second qubit register 32. Specifically, the first conditional variational quantum gate 38 acts based on the first quantum state 42 of the computation qubits, and the second conditional variational quantum gate 40 acts based on the second quantum state 44 of the computation qubits.

The second layer 36 of the variational quantum circuit 28 operates on the computation qubits in the second qubit register 32 which are again prepared in a superposition state by the application of Hadamard gates 41 prior to the use of the quantum state 42, 44 of the computation qubits for controlling the application of the first conditional variational quantum gate 38 and the second conditional variational quantum gate 40. Measurement sensors 16a and 16b are again used to measure the states of the register qubits and the computation qubits, respectively, after the execution of the variational quantum circuit 28.

In addition to the example illustrated in Fig. 4, the third layer 48 is provided as part of the variational quantum circuit 28, acting on the second register qubits in the third qubit register 46, in parallel to the application of the first layer 34 to the qubits of the first qubit register 30. The third layer 48 also includes encoding gates 22 for encoding the features of the input data into the quantum states of the second register qubits, and the encoding gates 22 of the third layer 48 may encode the same features as the encoding gates 22 of the first layer 34.

The third layer 48 also comprises a third conditional variational quantum gate 50 and a fourth conditional variational quantum gate 52. The third conditional variational quantum gate 50 acts on the second register qubits conditional on the first quantum state 42 of the computation qubits, while the fourth conditional variational quantum gate 52 acts on the second register qubits conditional on the second quantum state 44 of the computation qubits. Measurement sensors 16c are used to measure the states of the second register qubits after the execution of the third layer 48.

The measured state of the second register qubits may equally be considered as part of the postelection of the candidate outputs, wherein candidate outputs may only be maintained if both the first register qubits and the second register qubits are in a respective certain quantum state. For example, both the first register qubits and second register qubits may be in the same certain quantum state for maintaining a candidate output as part of the postelection process. In some examples, an action of the third conditional variational quantum gate 50 and the fourth conditional variational quantum gate 52 is the same as the action of the first conditional variational quantum gate 38 and the second conditional variational quantum gate 40, such that the third layer 48 is effectively a copy of the first layer 34 acting on a respective set of register qubits in the third qubit register 46.

By applying both the first layer 34 and the third layer 48 and performing postelection based on the measured outputs of the first register qubit and the second register qubits in the first and third qubit registers 30, 46, a quadratic activation function may be implemented in the in the quantum states of the computation qubits.

This can be derived in multiple steps. First, a single-layer SPQC (or a traditional QNN) with n register qubits consists of an encoding layer 22 S(X) and a variational layer 24 U(θ) for encoding the data sample and the variational parameters. Then the qubits are measured in the M basis. The expectation value of the system is

$$\langle \mathcal{M} \rangle = \langle 0 |^{\otimes n} S(\boldsymbol{X})^{\dagger} U(\theta)^{\dagger} \mathcal{M} U(\theta) S(\boldsymbol{X}) | 0 \rangle^{\otimes n} .$$

(1)

when the variational parameters applied conditional on a certain state $j$ of $m$ computation qubits, the first layer 34 can be considered to encode U(θj) the n qubits conditional on the m qubits being in the state |j⟩. When the first qubit register 30 is measured and used to post select the measured outputs in the second qubit register 32, using a measurement observable with a single state - for example M = (|0⟩⟨0|)$^{\otimes n}$ -only the shots where the n register qubits show a desired binary string, e.g. a binary string of all zeros, may be maintained. In this case, the amplitude of every state |j⟩ of the $m$ computation qubits may be considered as the output of the first layer 34 with parameters $\theta_j$.

Specifically, starting from an initially prepared quantum state of the first register qubits into which the input features X were encoded and the computation qubits prepared in a superposition using the action of the Hadamard gates 41, the quantum state of the qubits may be represented as

$$| \psi \rangle_{\mathrm{first}} = (S(\boldsymbol{X}) | 0 \rangle^{\otimes n}) \otimes (H | 0 \rangle)^{\otimes m} = 2^{-\frac{m}{2}} \left( \sum_{i=0}^{2^n-1} \alpha_i(\boldsymbol{X}) | i \rangle \right) \otimes \left( \sum_{j=0}^{2^m-1} | j \rangle \right)$$

(2)

now applying the conditional variational quantum gates of the first layer 34, the quantum state of the register and in select computation qubits may be transformed towards

$$|\psi\rangle_{\text{second}} = 2^{-\frac{m}{2}} \sum_{j=0}^{2^m-1} (U(\theta_j)S(\boldsymbol{X})\,|0\rangle^{\otimes n}) \otimes |j\rangle = 2^{-\frac{m}{2}} \sum_{j=0}^{2^m-1} \sum_{i=0}^{2^n-1} (U(\theta_j)\alpha_i(\boldsymbol{X})\,|i\rangle)\,|j\rangle \tag{3}$$

finally, applying the measurement operator to the quantum state of the first register qubits, the quantum state may be transformed towards

$$|\psi\rangle_{\text{third}} = 2^{-\frac{m}{2}} \sum_{j=0}^{2^m-1} (\langle 0|^{\otimes n} U(\theta_j)S(\boldsymbol{X})\,|0\rangle^{\otimes n})\,|j\rangle = \frac{2^{-\frac{m}{2}}}{\mathcal{N}} \sum_{j=0}^{2^m-1} p_j\,|j\rangle, \tag{4}$$

where

$$\mathcal{N} = \sum_{k=0}^{2^n-1} \sum_{j=0}^{2^m-1} (\langle k|\,U(\theta_j)S(\boldsymbol{X})\,|0\rangle^{\otimes n}) \tag{5}$$

is the normalization constant to account for all the shots that failed to produce the desired sequence. Thus, the application of the variational quantum circuit 28 of Fig. 4 prior to the application of the second layer 36 may produce a plurality of predictions $p_j$ in the states |j> of the computation qubits.

If in addition the third layer 48 as a copy of the first layer 34 is applied to the state of the register qubits in the third qubit register 46, equally conditional on the state of the computation qubits, the quantum state of the qubits in the qubit registers 30, 32, 46 is transformed towards

$$|\psi\rangle_{\text{second}}^{\text{quadratic}} = 2^{-\frac{m}{2}} \sum_{j=0}^{2^m-1} \sum_{i=0}^{2^n-1} \sum_{i'=0}^{2^n-1} (U(\theta_j)\alpha_i(\boldsymbol{X})\,|i\rangle)(U(\theta_j)\alpha_{i'}(\boldsymbol{X})\,|i'\rangle)\,|j\rangle \tag{6}$$

and measurement and postelection of the results based on the states of the first qubit register 30 and the third qubit register 46 being in the desired state transforms the quantum states of the involved qubits towards

$$|\psi\rangle_{\text{third}}^{\text{quadratic}} = 2^{-\frac{m}{2}} \sum_{j=0}^{2^m-1} \left(\sum_{i=0}^{2^n-1} \langle 0|^{\otimes n} U(\theta_j)\alpha_i(\boldsymbol{X})\,|i\rangle\right)^2 |j\rangle = \frac{2^{-\frac{m}{2}}}{\mathcal{N}^2} \sum_{j=0}^{2^m-1} p_j^2\,|j\rangle. \tag{7}$$

As a result, the combined action of the first layer 34 and the third layer 48 may produce a quadratic output in the state of the computation qubits, which may then be further processed with the second layer 36, which may enable their approximation of more complex labeling functions, analogous to a classical deep neural network with multiple hidden layers.

The skilled person will appreciate that further copies may be used to produce higher orders of a first layer 34 prediction in the quantum state of the computation qubits and that the timing of the measurement of the register qubits is not crucial, with respect to the application of the gates of the second layer 36 or the measurement of the computation qubits as long as coherence is maintained.

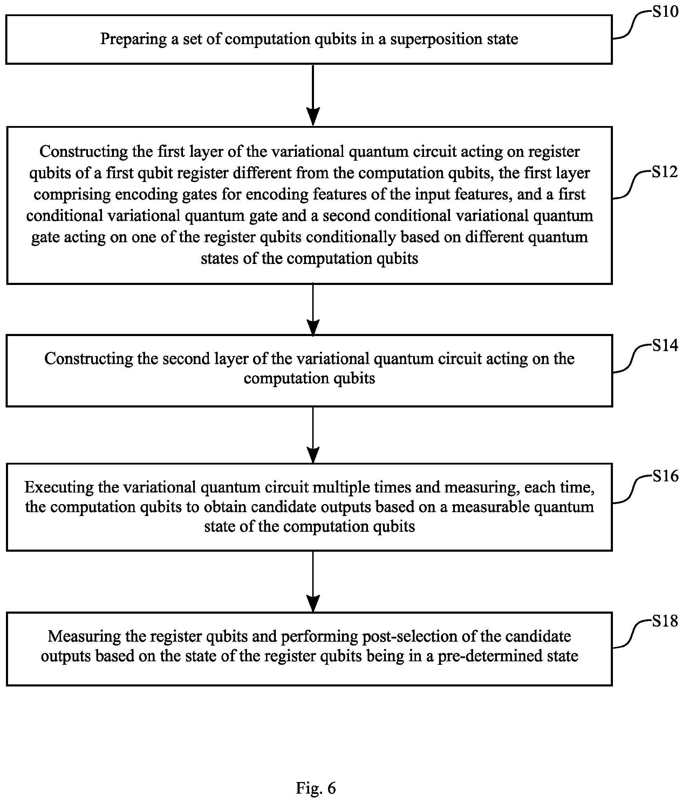

Figure 6 illustrates a flowchart of a method for implementing a hybrid quantum-classical computation system 10 for implementing and driving a variational quantum circuit 28. The process begins at step S10 with the preparation of a set of computation qubits in a superposition state. In step S12, the first layer 34 of the variational quantum circuit 28 is constructed. This layer acts on register qubits of a first qubit register 30, which are distinct from the computation qubits. The first layer 34 includes encoding gates 22 that encode features of the input data into the quantum states of the register qubits. Additionally, the first layer 34 comprises a first conditional variational quantum gate 38 and a second conditional variational quantum gate 40. The conditional variational quantum gates act on one of the register qubits conditionally based on different quantum states 42, 44 of the computation qubits, allowing for parameterized actions according to variational parameters.

Step S14 involves constructing the second layer 36 of the variational quantum circuit 28, which acts on the computation qubits. This layer includes a plurality of variational quantum gates that operate on the computation qubits according to respective variational parameters.

In step S16, the variational quantum circuit 28 is executed multiple times. During each execution, the computation qubits are measured to obtain candidate outputs based on their measurable quantum states. Step S18 involves measuring the register qubits and performing post-selection of the candidate outputs. The post-selection is based on the state of the register qubits being in a predetermined state.

The hybrid quantum-classical machine learning model can be trained to approximate the given labeling function. This training should be based on the post-selected set of candidate outputs for the set of input features. The training process involves iteratively optimizing the machine learning parameters of the variational quantum circuit 28, including the variational parameters of both the first and second layers, where the steps S10-S18 may be repeated multiple times to iteratively update the variational parameters of the first layer 34 and the second layer 36.

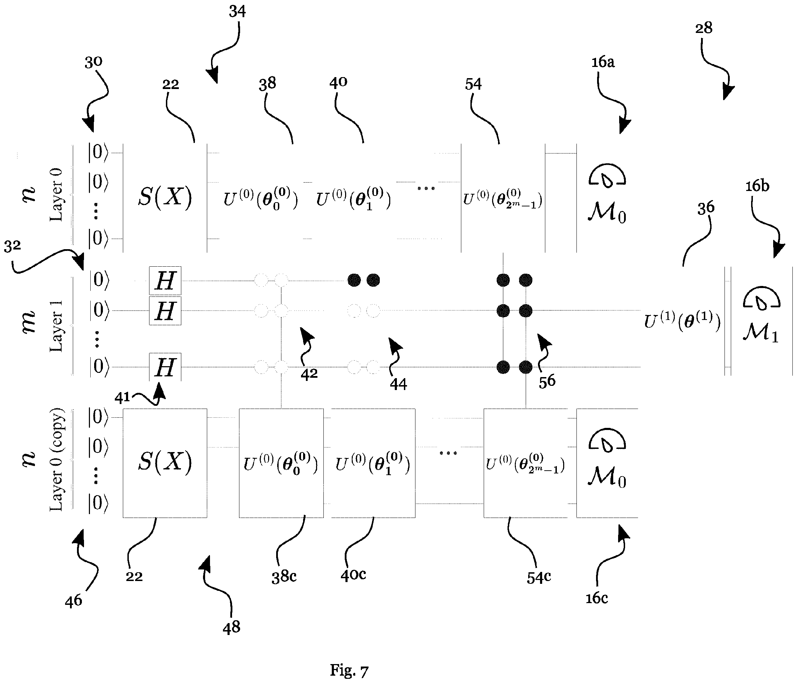

Figure 7 illustrates a detailed schematic of a variational quantum circuit 28, in the following also referred to as a Superposed Parameterized Quantum Circuit (SPQC), with two hidden layers, implementing a quadratic activation function at the end of the first layer 34, and its copy 48, similar to the example of Fig. 5. The variational quantum circuit 28 is designed to process quantum data through multiple layers, each introducing non-linearity and parallel processing capabilities. The SPQC comprises three main sections: Layer 0 corresponding to the first layer 34 of the previous examples, Layer 1 corresponding to the second layer 36 of the previous examples, and a copy of Layer 0 corresponding to the third layer 48 of the previous examples. In the following, Layer 0 and its copy will together be considered as an initial joint "Layer o".

Layer 0 is represented at the top and bottom sections of the figure, with qubit registers 30 and 46, respectively, on which a first layer 34 and a third layer 48 act, respectively. Each qubit register 30, 46 contains n qubits initialized to the state ($|0>$). The encoding layer 22, denoted as $S(X)$, maps classical data X onto the quantum state of the qubits in the first and third qubit registers 30, 36. Following the encoding, a series of variational quantum gates 38, 40, and 54, denoted as

$$(U^0(\theta_0^0)), (U^0(\theta_1^0)), ..., (U^0(\theta_{2^{n-1}}^0)), \qquad (8)$$

are applied to the qubits. These gates are parameterized by variational parameters $\theta$ and are responsible for manipulating the quantum state based on trainable parameters. The measurement sensors 16a and 16c, denoted as $M_o$, measure the quantum state of the qubits in Layer o.

Layer 1, represented in the middle section of the figure, contains m computation qubits initialized to the state $|0>$. Hadamard gates 41 are applied to these qubits to create a superposition state. The computation qubits control the application of the conditional variational quantum gates 38, 40, 54 in Layer 0 through multi-controlled gates conditional on different quantum states 42, 44, 56, indicated by the black and white circles representing excited and ground states of the respective control qubits, respectively. The first quantum state of the computation qubits 42 and the second quantum state of the computation qubits 44 are depicted, showing the conditional application of the conditional variational quantum gates 38, 40 in Layer o based on the state of the computation qubits being $|00...0>$ and $|10...0>$, respectively. In addition, a further conditional variational quantum gate 54 is depicted which acts on the register qubit conditional on the state 56 of the computation qubits, in the example corresponding to $|11...1>$.

It is noted that the first layer 34 and the third layer 48 forming Layer 0 of the SPQC are considered to comprise $2^m$ variational quantum gates 38, 40, 56 each conditional on a different one of the $2^m$ computational basis states of the m computation qubits.

The computation qubits are measured by the measurement sensor 16b, denoted as $M_1$, to obtain the output of the SPQC after the application of the second layer 36, which comprises variational quantum gates with an effective action $U^{(1)}(\theta^{(1)})$.

The SPQC circuit in Figure 7 demonstrates an implementation of a quadratic activation function by utilizing multiple copies of Layer o. The post-selection process may ensure that only the outputs where all copies produce the same binary string are considered, introducing non-linearity into the quantum model.

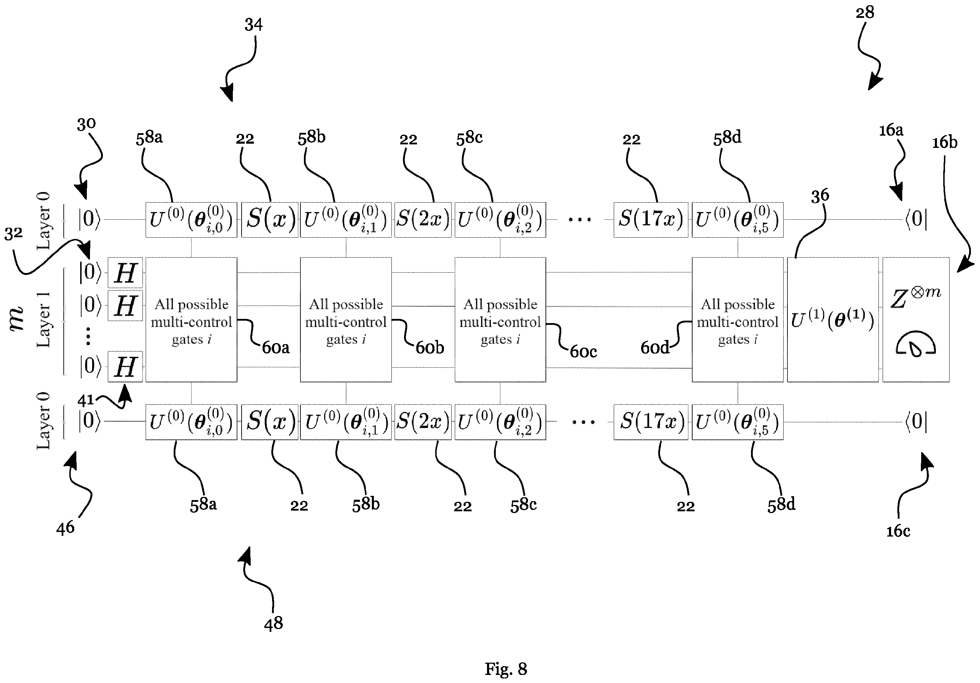

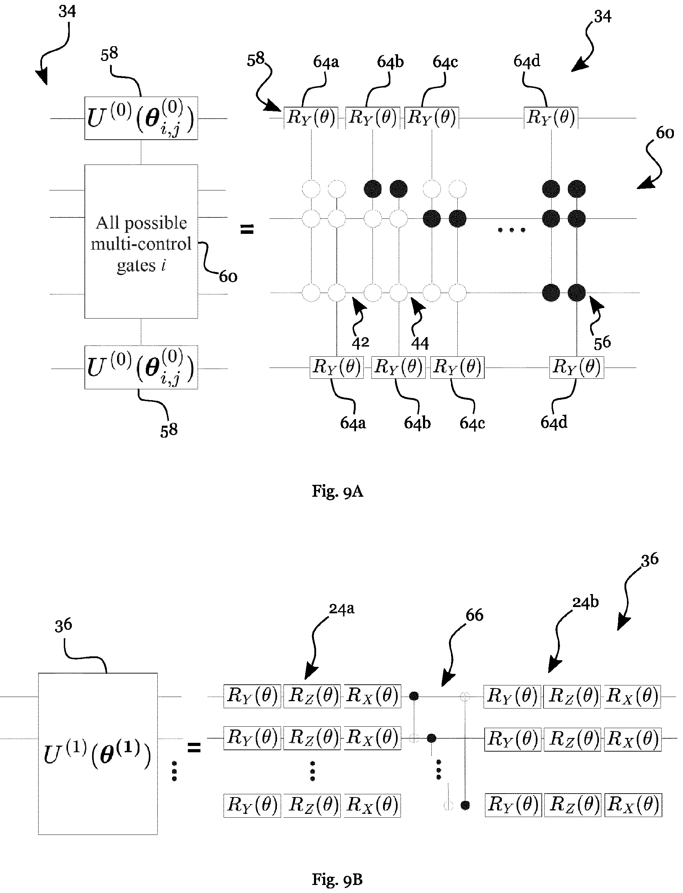

Figure 8 illustrates an example of a variational quantum circuit 28 with multiple layers implementing a quadratic activation function and multiple concatenated sub-layers for the first layer 34, employing a data re-uploading strategy. Figs. 9A and 9B show two different top-level elements of the variational quantum circuit 28 depicted in Fig. 8.

The variational quantum circuit 28 shown in Fig. 8 acts on a first qubit register 30, a second qubit register 32, and a third qubit register 46. The first qubit register 30 is associated with Layer 0, while the second qubit register 32 is associated with Layer 1. The third qubit register 46 is also associated with another instance of Layer 0, as in the example of Fig. 7.

The circuit begins with the initialization of the computation qubits in the second qubit register 32, which are prepared in a superposition state using Hadamard gates H. The first layer 34 and the third layer 48 as part of Layer 0 of the variational quantum circuit 28 act on the register qubits of the first qubit register 30 and the third qubit register 46, respectively. These layers 34, 48 each comprise encoding gates 22, which encode features of the input data x into the quantum states of the register qubits. The encoding gates 22 are interlaced with conditional variational quantum gate layers 58a-d, which are parameterized by respective variational parameters $\theta_{i,k}^{o}$. The interlacing of variational quantum gate layers 58a-d and encoding can implement a data re-uploading strategy, for increasing the effective order of a Fourier fit by the variational quantum circuit to the input data.

Each of the conditional variational quantum gate layers 58a-d comprises multiple conditional variational quantum gates 6a-64d controlled by the quantum states 42, 44, 56 of the computation qubits based on corresponding computation qubit control sections 60a, 60b, 60c, and 60d of the variational quantum circuit 28. These computation qubit control sections 60a-d are responsible for implementing all possible multi-control gate combinations i of the computational basis states of the computation qubits, as illustrated in detail in Fig. 9A. In the example of Fig. 9A, the conditional variational quantum gates are implemented as single qubit rotations (exemplarily about the Y-axis) each conditional on a different quantum state 42, 44, 56 of all computation qubits and parametrized by a respective variational parameter $\theta$.

After the conditional variational quantum gate layers 58a-d have acted on the register qubits, the state of the register qubits can be measured by the measurement sensors 16a and 16c and the results used for post-selection, based on the register qubits being in the state |0>.

The second layer 36 of the variational quantum circuit 28 acts on the computation qubits in the second qubit register 32 after the action of the conditional variational quantum gate layers 58a-d of Layer 0. The second layer 36 includes a plurality of variational quantum gates $U^{(1)}(\theta^{(1)})$, which act on the computation qubits according to respective second layer variational parameters $\theta^{(1)}$.

Figure 9B illustrates an implementation of the second layer 36 of a variational quantum circuit 28 with multiple layers according to an example. The second layer 36 comprises a plurality of variational quantum gates 24a-b and an entangling gate layer 66. The variational quantum gates 24a-b are implemented as a combination of $R_Y(\theta)$, $R_Z(\theta)$, and $R_X(\theta)$ rotations, which are parameterized by the variational parameters $\theta$. The entangling gate layer 66 is used to entangle the states of the computation qubits, allowing for the creation of complex quantum states. The figure shows that the variational quantum gates 24a-b are applied to the computation qubits in a sequential manner, with the entangling gate layer 66 interspersed between two layers of variational quantum gates 24a, 24b. Although Fig. 9B only shows two layers of variational quantum gates 24a, b separated by an entangling gate layer 66, the skilled person will appreciate that any (smaller/higher) number of entangling gate layers 66 and variational quantum gates 24a, b may be used in examples, which may be applied to the quantum states of the computation qubits in alternating fashion.

The output of this second layer 36 is measured using the $Z^{\otimes m}$ basis, through measurement sensors 16b to measure the final quantum state of the computation qubits, and after post selection based on the state of the register qubits, the remaining results are used to determine the post-selected set of candidate outputs of the variational quantum circuit 28.

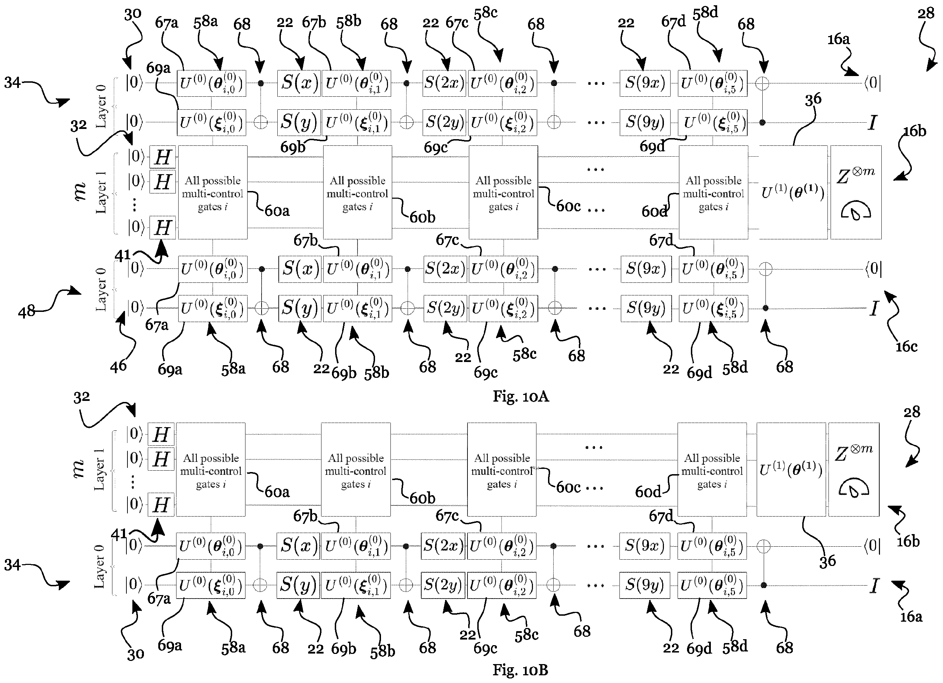

Figure 10A and Figure 10B illustrate examples of variational quantum circuits 28 similar to the examples of Fig. 8 and 7, respectively, implementing a data re-uploading strategy with two qubits in the qubit registers 30, 46 of Layer 0, with the first layer 34 and the third layer 48 each being composed of six conditional variational quantum gate layers 58a-d (numbered from 0 to 5). Fig. 10A illustrates an example with a third layer 48 provided to implement a Layer 0 copy (of the first layer 34), while Fig. 10B only features the first layer 34.

As a consequence of the first (third) qubit register 30,46 comprising two register qubits on which the first (third) layer 34, 48 act, each of the conditional variational quantum gate layers 58a-d is composed of first conditional variational quantum gates 67a-d and second conditional variational quantum gates 69a-d acting on the first and second qubits of the respective qubit register 30, 46 according to different variational parameters $\theta_{i,\,0-5}$ and $\xi_{i,\,0-5}$, respectively, but conditional on the same quantum states 42, 44, 56 of the computation qubits.

As in the previous example, the computation qubit control sections 60a, 60b, 60c, and 60d of the variational quantum circuit 28 represent a number i different quantum states (e.g. computational basis states) of the computation qubits employed as control qubits of the first conditional variational quantum gates 67a-d and second conditional variational quantum gates 69a-d, and for each of the i different quantum states, different variational parameters $\theta_{i,\,0-5}$ and $\xi_{i,\,0-5}$ are considered.

Similarly, each of the encoding gate layers 22 comprises an encoding gate for each register qubit for encoding different features x, y, respectively. The encoding gates 22 are interlaced between the conditional variational quantum gate layers 58a-d. In the examples of Figs. 10A, 10B, the input features are scaled for different encoding gate layers according to an exponential data re-uploading scheme.

In addition, after the application of conditional variational quantum gate layers 58a-d, the first (third) layer 30, 48 comprises entangling gates 68 for entangling the quantum states of the register qubits, implemented as CNOT gates applied to the two register qubits in the illustrated example.

The second layer 36 of the variational quantum circuit 28 acts on the computation qubits and comprises a plurality of variational quantum gates acting on the computation qubits according to respective second layer variational parameters. The second layer 36 may again be provided as shown in Fig. 9B, with variational quantum gates 24a, b and entangling gates 66 directly acting on the computation qubits, before the states of the qubits are measured by measurements sensors 16b, and the resulting candidate output is post-selected based on the measured state of the register qubits at the sensors 16a, 16c.

In Figure 10A, the circuit implements a quadratic activation function by creating a copy of the first layer 34 as the third layer 48. The candidate outputs where all copies produce the same binary string in the measured states of the register qubits are selected through post-selection. In Figure 10B, the circuit implements a linear activation function with a similar structure to Figure 10A but without the quadratic activation function.

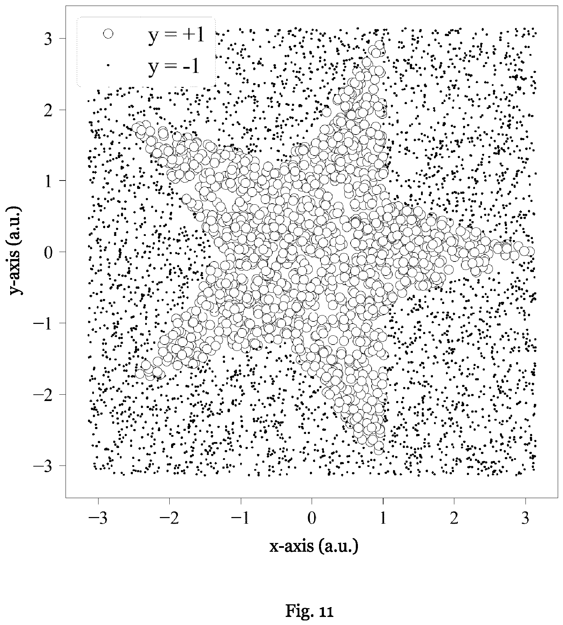

Figure 11 illustrates a sample dataset utilized for experiments with two different object classes distributed in a two-dimensional space. The dataset consists of 5000 datapoints, each represented by coordinates x, y, where the x and y axes range from [$-\pi$, $\pi$). The labels for the dataset are $\pm 1$, which are illustrated with different markers: circular markers indicate data points with a label of +1, and square markers indicate data points with a label of -1. The plot provides a visual representation of the dataset, showing how the data points are distributed in the two-dimensional space and the separation between the two classes.

The data points are distributed in such a way that they form a star shape in the center of the plot. The circular markers, representing the +1 class, are densely packed within the star shape, while the square markers, representing the -1 class, are scattered outside the star shape.

This dataset is used to test the performance of the Superposed Parameterized Quantum Circuits (SPQC) using the circuit examples illustrated in Figs. 10A, 10B, wherein the variational parameters of the layers 34, 36, 38 are trained, such that the measured output of the computation qubits approximates the label distribution in the dataset of Fig. 11 based on the x, y coordinates provided as input features to the first (third) layer 34, 48. The star-shaped distribution of the data points makes it an ideal test case for evaluating the model's ability to classify complex datasets with sharp edges and non-linear boundaries.

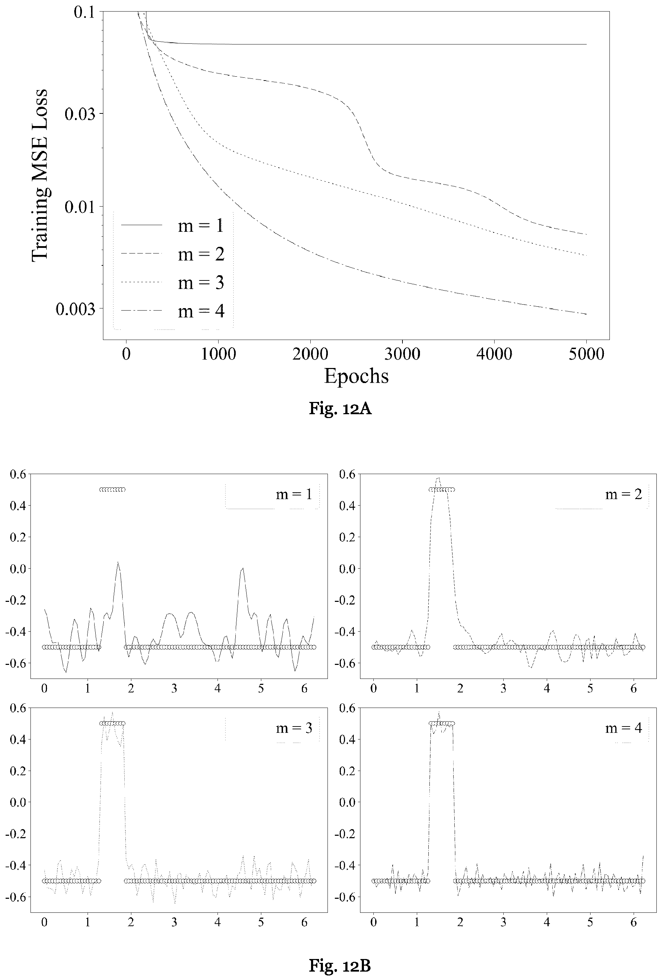

Figure 12A illustrates the training Mean Squared Error (MSE) loss over 5,000 epochs for four Superposed Parameterized Quantum Circuit SPQC models with the architecture shown in Fig. 10A, with varying numbers of computation qubits in the second qubit register 32 (denoted as m). The x-axis represents the number of training epochs, while the y-axis represents the training MSE loss on a logarithmic scale. The plot includes four distinct curves, each corresponding to a different value of m: 1,2,3, and 4 (highlighted by solid, dashed, dotted, and dash-dotted lines representing m = 1, m = 2, m = 3, and m = 4, respectively). The curves show that as the number of computation qubits in the second qubit register 32 increases, the MSE loss decreases more rapidly, indicating improved model performance with a higher number of computation qubits.

Figure 12B provides a visual comparison of the functional fits associated with each of the four trained SPQC models. The figure is divided into four subplots, each corresponding to a different value of m: 1, 2, 3, and 4. Each subplot displays the function fit of the respective SPQC model at a slice through the dataset, with the x-axis representing the input data space and the y-axis representing the output values. The solid lines in each subplot represent the fit of the SPQC model, and the circles indicate 100 data points representing the classification problem in the slice. The subplots show that as the number of qubits in the first layer increases, the model's ability to fit the data improves significantly, with the m = 4 model showing the best fit among the four.

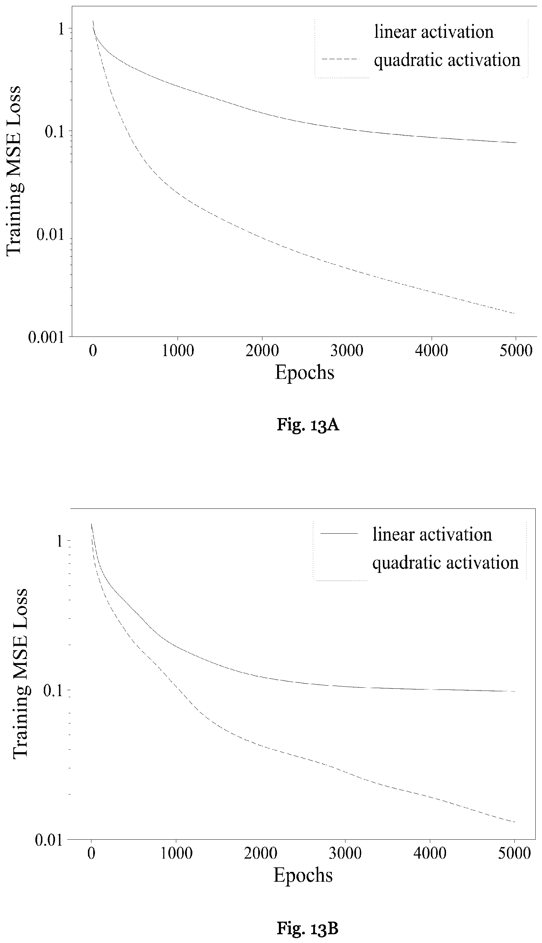

Figure 13A illustrates a comparison of the training mean squared error (MSE) loss over 5,000 epochs for Superposed Parameterized Quantum Circuit SPQC models with 4 qubits in Layer 1, employing both linear and quadratic activation functions, with the quantum circuit architectures illustrated in Figs. 10B, 10A, respectively. The x-axis represents the number of epochs, while the y-axis represents the training MSE loss on a logarithmic scale. The solid line represents the model with a linear activation function (Fig. 10B), and the dashed line represents the model with a quadratic activation function (Fig. 10A). The graph shows that the model with the quadratic activation function achieves a lower MSE loss compared to the model with the linear activation function, indicating better performance in terms of fitting the data, even though the number of variational parameters is the same for both models.

Figure 13B illustrates a similar comparison of the training MSE loss over 5,000 epochs for SPQC models with 3 qubits in Layer 1, again employing both linear and quadratic activation functions. The x-axis represents the number of epochs, while the y-axis represents the training MSE loss on a logarithmic scale. The solid line represents the model with a linear activation function, and the dashed line represents the model with a quadratic activation function. The graph shows that the model with the quadratic activation function achieves a lower MSE loss compared to the model with the linear activation function, similar to the results observed in Figure 13A.

In both figures, the quadratic activation function demonstrates a significant improvement in reducing the training MSE loss over time compared to the linear activation function. This suggests that the introduction of non-linear activation functions, such as the quadratic activation function, enhances the learning capability of the SPQC models, allowing them to better approximate complex functions and achieve lower error rates during training.

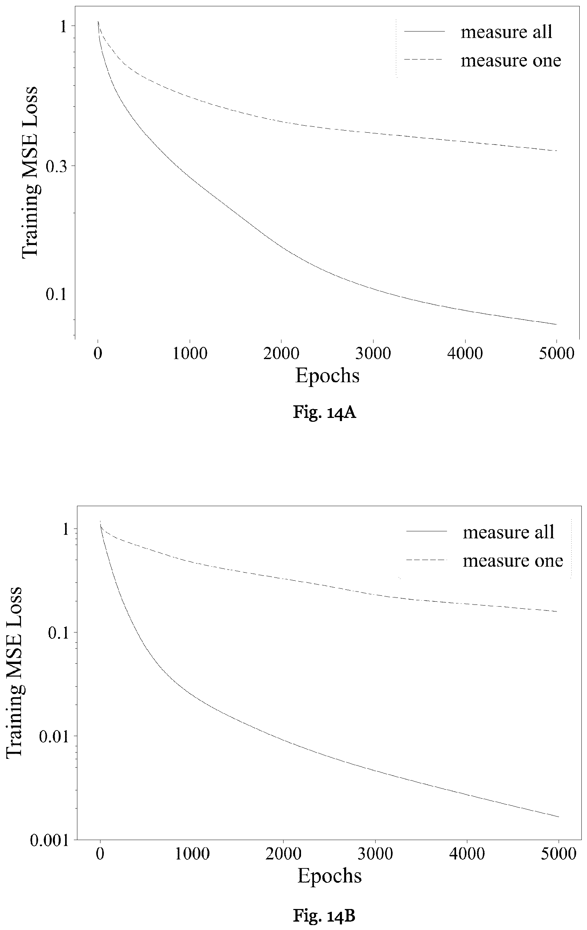

Figure 14A illustrates the training Mean Squared Error MSE loss over 5000 epochs for a Superposed Parameterized Quantum Circuit SPQC model with a linear activation function (based on the circuit architecture illustrated in Fig. 10B), comparing two measurement strategies: 'measure all' and 'measure one' for the register qubits used to post-select the candidate outputs. The x-axis represents the number of epochs, while the y-axis represents the training MSE loss on a logarithmic scale. The 'measure all' strategy is depicted with a solid line, and the 'measure one' strategy is depicted with a dashed line. The graph shows that the 'measure all' strategy consistently achieves a lower MSE loss compared to the 'measure one' strategy, indicating a more efficient learning process, when the measured state of the register qubits used for post-selection is based on the measured state of both qubits as opposed to the measured state of one of the qubits.

Figure 14B illustrates a similar comparison for an SPQC model with a quadratic activation function (based on the circuit architecture illustrated in Fig. 10A). The x-axis again represents the number of epochs, while the y-axis represents the training MSE loss on a logarithmic scale. The 'measure all' strategy is depicted with a solid line, and the 'measure one' strategy is depicted with a dashed line. The graph shows that the 'measure all' strategy again achieves a significantly lower MSE loss compared to the 'measure one' strategy, indicating a more efficient learning process for the quadratic activation function as well.

In both figures, the 'measure all' strategy outperforms the 'measure one' strategy, demonstrating the advantage of measuring all qubits in the first layer (Layer 0) for better model performance.

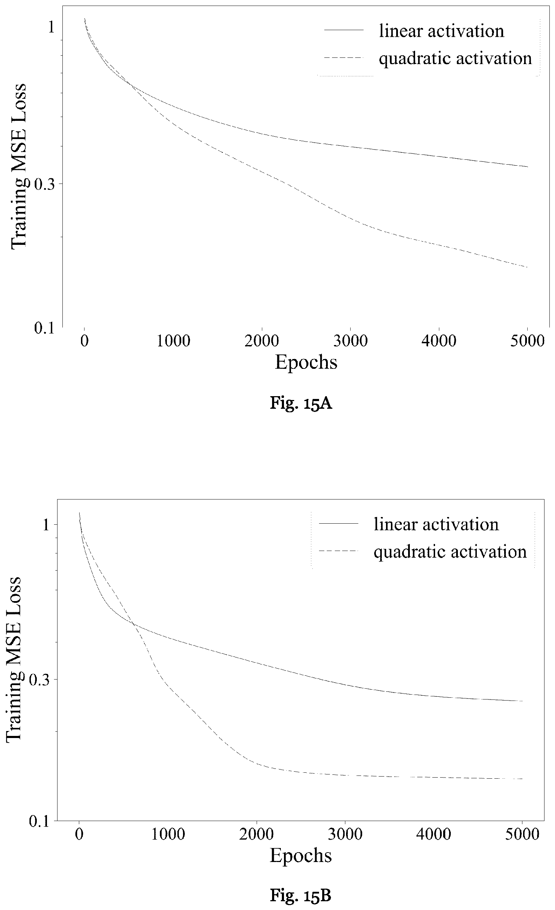

Figure 15A illustrates a comparison of the training mean squared error MSE loss over 5,000 epochs for two Superposed Parameterized Quantum Circuit SPQC models with different activation functions, both models employing m=4 computation qubits in Layer 1. The solid line represents the model with a linear activation function (based on the circuit architecture illustrated in Fig. 10B), while the dashed line represents the model with a quadratic activation function (based on the circuit architecture illustrated in Fig. 10A). The x-axis denotes the number of epochs, and the y-axis represents the training MSE loss.

Figure 15B presents a similar comparison for smaller SPQC models with three qubits in Layer 1. Again, the solid line corresponds to the model with a linear activation function, and the dashed line corresponds to the model with a quadratic activation function. The x-axis and y-axis are the same as in Figure 15A. The graph demonstrates that the model with the quadratic activation function initially learns slower but eventually outperforms the model with the linear activation function, achieving a significantly lower MSE loss by the end of the training period.

In both figures, the quadratic activation function enhances the model's ability to fit the training data more accurately compared to the linear activation function. This improvement is evident from the lower MSE loss values achieved by the models with the quadratic activation function. The results suggest that incorporating non-linear activation functions, such as the quadratic function, into SPQC models can lead to better performance in machine learning tasks, particularly in terms of reducing the training error.

Overall, Figures 15A and 15B provide empirical evidence supporting the use of quadratic activation functions in SPQC models to enhance their learning capabilities and achieve better performance in terms of training accuracy.

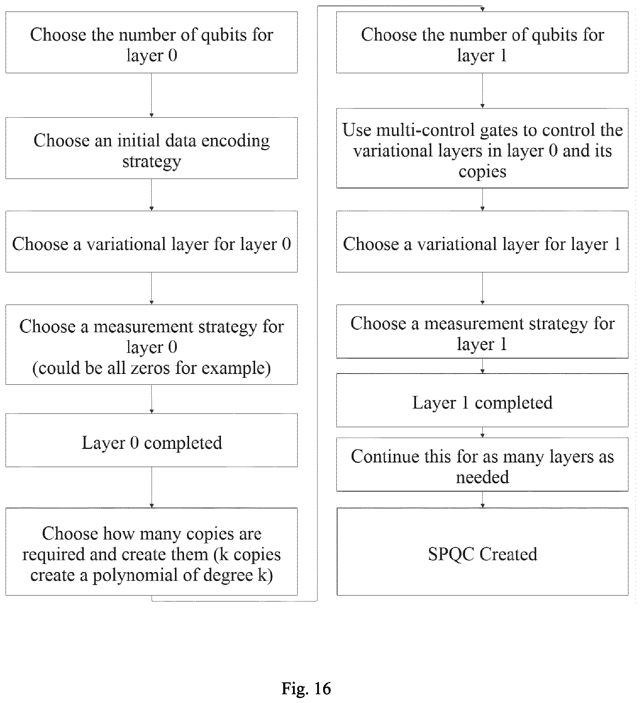

Figure 16 illustrates a decision flowchart for determining the architecture of a Superposed Parameterized Quantum Circuit SPQC. The flowchart is divided into two main columns, each representing a sequence of steps for constructing different layers of the SPQC.

The left column begins with the step of choosing the number of qubits for layer 0, indicating the initial decision regarding the number of qubits to be used in the first layer of the quantum circuit. The selection of the qubit number will generally depend on the complexity of the input data, with larger numbers of register qubits enabling the encoding of more input features at the same circuit depth and at increased Fourier representability. Subsequently, the method chooses an initial data encoding strategy, which involves selecting a method for encoding the input data onto the quantum states of the qubits in Layer o. The subsequent step is choosing a variational layer for Layer o, where a variational quantum circuit architecture is selected to act on the encoded data, e.g. specified in terms of the specifics of the first (third) layer 34, 48, such as the number of conditional variational quantum gate layers 58a-d, the particulars of the conditional variational quantum gates 64a-d, and/or the presence of further variational gates and/or entangling gates 68.

In the next step, a measurement strategy for Layer 0 is selected, which could include projecting the qubits onto a specific basis state, such as the all-zeros state and the states and number of involved register qubits for post-selection for completing Layer o.

The quantum circuit architecture may further be specified in terms of the number of copies of Layer 0 for increasing the effective order of the activation function (k copies create a polynomial of degree k). The method further comprises the specification of the number of qubits for Layer 1, i.e. the number of computation qubits, and the associated definition of multi-control gates to control the variational layers 24 in Layer 0 and its copies based on the quantum state of the computation qubits.

After the computation qubits have controlled the application of the conditional variational quantum gates 64a-d, a variational layer of Layer 1 acts on the computation qubits, based on a selected variational quantum circuit for the second layer 36, and the computation qubits are measured according to a chosen measurement strategy for Layer 1, involving the selection of a measurement basis and a considered qubit number (e.g. one, part of, or all qubits) for the qubits in Layer 1 to determine the candidate output.

The method can proceed with the construction of additional layers, where the next layer would consider the "computation qubits" of Layer 1 as register qubits to be controlled based on the states of a new set of computation qubits prepared in a superposition state. In this case the second layer 36 comprises conditional variational quantum gates.

The final step in the right column is "SPQC Created," indicating the successful construction of the Superposed Parameterized Quantum Circuit with the desired number of layers and non-linear activation functions.

For a specific example of the method of constructing the variational quantum circuit 28 of Fig. 10A, the SPQC construction begins by choosing two qubits for layer 0 and employing an angle-embedded data encoding strategy. A variational layer consisting of parameterized rotation gates is selected for Layer o, and the measurement strategy involves projecting the qubits onto the all-zeros state. Two copies of Layer 0 are created to achieve a quadratic activation function. For Layer 1, a number of m, e.g. four, qubits are chosen, and multi-controlled gates are used to control the application of the conditional variational quantum gates across the copies of Layer o. A variational layer as illustrated in Fig. 9B is selected for Layer 1, and the measurement strategy involves projecting the qubits onto a specific basis state in the Z-basis.

The examples of the present disclosure disclosed herein only constitute specific examples for illustration purposes. The present invention can be implemented in various ways and with many modifications without altering the underlying basic properties. Therefore, the present invention is only defined by the claims as stated below.

**Claims**

1. A computer-implemented method for implementing a hybrid quantum-classical machine learning model including a variational quantum circuit (28) comprising a first layer (34) and a second layer (36) to approximate a given labeling function of a set of input features, the method comprising:

   preparing a set of computation qubits in a superposition state;
   constructing the first layer (34) of the variational quantum circuit (28) acting on register qubits of a first qubit register (30) different from the computation qubits, wherein the first layer (34) of the variational quantum circuit (28) comprises

      - encoding gates (22) for encoding features of the input features in the quantum states of the register qubits, and
      - variational quantum gates comprising a first conditional variational quantum gate (64a-d) and a second conditional variational quantum gate (64a-d),
      - the first conditional variational quantum gate acting on one of the register qubits conditional on a first quantum state (42) of the computation qubits and with a parametrized action according to a first variational parameter, and
      - the second conditional variational quantum gate (64a-d) acting on the one of the register qubits conditional on a second quantum state (44) of the computation qubits, different from the first quantum state (42) of the computation qubits, and with a parametrized action according to a second variational parameter;

   constructing the second layer (36) of the variational quantum circuit (28) acting on the computation qubits in a second qubit register (32), the second layer (36) comprising a plurality of variational quantum gates acting on the computation qubits according to respective second layer (36) variational parameters;
   executing the variational quantum circuit (28) multiple times and measuring, each time, the computation qubits to obtain candidate outputs based on a measurable quantum state of the computation qubits; and
   measuring the register qubits and performing post-selection of the candidate outputs based on the state of the register qubits being in a pre-determined state to determine a post-selected set of candidate outputs of the variational quantum circuit (28).

2. The method of claim 1, wherein the first qubit register (30) comprises a plurality of register qubits, wherein the first layer (34) comprises a first conditional quantum gate (64a-d) for each of the register qubits with a respective individually variable first variational parameter.

3. The method of any one of the preceding claims, wherein the first conditional variational quantum gate (64a-d) is conditionally applied based on the state of a plurality, in particular all, computation qubits; and/or
   wherein the first quantum state and/or the second quantum state differs in the quantum state of at least one of the computation qubits.

4. The method of any one of the preceding claims, wherein the first layer (34) comprises a plurality of conditional variational quantum gates (64a-d) acting on the one of the register qubits conditional on an associated quantum state of the computation qubits, wherein for each of the conditional variational quantum gates (64a-d), the associated quantum state is different, and in particular corresponds to a different computational basis state of the computation qubits, and/or wherein the number of conditional variational quantum gates (64a-d) is equal to the number of computational basis states spanned by the computation qubits.

5. The method of any one of the preceding claims, wherein the first qubit register (30) comprises a plurality of register qubits, and wherein the post-selection of the candidate outputs based on the state of the register qubits being in a pre-determined state is based on the measured state on a plurality of register qubits, in particular all register qubits.

6. The method of any one of the preceding claims, wherein the encoding gates (22) are interlaced between the conditional variational quantum gates (64a-d).

7. The method of any one of the preceding claims, wherein the variational quantum circuit (28) further comprises a third layer (48), and the method comprises:
   constructing the third layer (48) of the variational quantum circuit (28) acting on second register qubits of a third qubit register (46), wherein the third layer (48) of the variational quantum circuit (28) comprises:

   - encoding gates (22) for encoding the features of the input features in the quantum states of the second register qubits, and
   - variational quantum gates comprising a third conditional variational quantum gate (64a-d) and a fourth conditional variational quantum gate (64a-d),
   - the third conditional variational quantum gate (64a-d) acting on one of the second register qubits conditional on the first quantum state (42) of the computation qubits and with a parametrized action according to a third variational parameter, and
   - the fourth conditional variational quantum gate (64a-d) acting on the one of the second register qubits conditional on the second quantum state (44) of the computation qubits, different from the first quantum state (42) of the computation qubits, and with a parametrized action according to a fourth variational parameter;

8. The method of claim 7, wherein the third variational parameter is equal to the first variational parameter, and the fourth variational parameter is equal to the second variational parameter.

9. The method of any one of the preceding claims, wherein the second layer (36) acts on the computation qubits after the state of computation qubits has controlled the conditional application of the first conditional variational quantum gate (64a-d) and the second conditional variational quantum gate (64a-d) on the register qubits of the first qubit register (30).

10. The method of any one of the preceding claims, wherein the first layer (34) further comprises entangling gates entangling the states of the register qubits between the application of the first conditional variational quantum gate (64a-d) and the second conditional variational quantum gate (64a-d) first layer (34), and/or wherein the second layer (36) further comprises entangling gates entangling the states of the computation qubits.

11. The method of any one of the preceding claims, wherein the second layer (36) does not include encoding gates (22).

12. A hybrid quantum-classical computation system for approximating a given labeling function of a set of input features, the hybrid quantum-classical computation system comprising

   a first qubit register (30) comprising register qubits,
   a second qubit register (32) comprising computation qubits different from the register qubits, and
   a variational quantum circuit (28) comprising a first layer (34), a second layer (36), and an computation initialization layer;
   wherein the computation initialization layer prepares the computation qubits of the second qubit register (32) in a superposition state;
   wherein the first layer (34) of the variational quantum circuit (28) acts on the register qubits of the first qubit register (30), wherein the first layer (34) of the variational quantum circuit (28) comprises

   - encoding gates (22) for encoding features of the input features in the quantum states of the register qubits, and
   - variational quantum gates comprising a first conditional variational quantum gate (64a-d) and a second conditional variational quantum gate (64a-d),
   - the first conditional variational quantum acting on one of the register qubits conditional on a first quantum state (42) of the computation qubits and with a parametrized action according to a first variational parameter, and
- the second conditional variational quantum gate (64a-d) acting on the one of the register qubits conditional on a second quantum state (44) of the computation qubits, different from the first quantum state (42) of the computation qubits, and with a parametrized action according to a second variational parameter;

wherein the second layer (36) comprises a plurality of variational quantum gates acting on the computation qubits according to respective second layer (36) variational parameters;
wherein the hybrid quantum-classical computation system is configured to

- execute the variational quantum circuit (28) multiple times and measure, each time, the computation qubits to obtain candidate outputs based on a measurable quantum state of the computation qubits; and
- obtain a measurement result of the register qubits and performing post-selection of the candidate outputs based on a measured state of the register qubits being in a pre-determined state to determine a post-selected set of the candidate outputs of the variational quantum circuit (28).

13. The system (10) of claim 12, wherein the system (10) is further configured to communicate the variational quantum circuit (28) to a quantum computing system for executing the variational quantum circuit (28) on quantum hardware.

14. The hybrid quantum-classical computing system (10) of claim 12 or 13 further comprising quantum computing hardware, wherein the hybrid quantum-classical computing system (10) is configured to

receive an implementation of the variational quantum circuit (28) from a processing system,
implement the implementation in the quantum computing hardware, and
receive the measurement result from the quantum computing hardware.

15. A non-transitory medium comprising machine-readable instructions, which, when executed by a processing system (20), implement a method according to any one of claims 1-11 and/or a system according to any one of claims 12-14.

Fig. 1

Fig. 2

Fig. 3A

Fig. 3B

Fig. 4

Fig. 5

| Preparing a set of computation qubits in a superposition state | S10 |

↓

| Constructing the first layer of the variational quantum circuit acting on register qubits of a first qubit register different from the computation qubits, the first layer comprising encoding gates for encoding features of the input features, and a first conditional variational quantum gate and a second conditional variational quantum gate acting on one of the register qubits conditionally based on different quantum states of the computation qubits | S12 |

↓

| Constructing the second layer of the variational quantum circuit acting on the computation qubits | S14 |

↓

| Executing the variational quantum circuit multiple times and measuring, each time, the computation qubits to obtain candidate outputs based on a measurable quantum state of the computation qubits | S16 |

↓

| Measuring the register qubits and performing post-selection of the candidate outputs based on the state of the register qubits being in a pre-determined state | S18 |

Fig. 6

Fig. 7

Fig. 8

Fig. 9A

Fig. 9B

Fig. 10A

Fig. 10B

Fig. 11

Fig. 12A

Fig. 12B

**Fig. 13A**

**Fig. 13B**

Fig. 14A

Fig. 14B

Fig. 15A

Fig. 15B

Choose the number of qubits for
layer 0

Choose an initial data encoding
strategy

Choose a variational layer for layer 0

Choose a measurement strategy for
layer 0
(could be all zeros for example)

Layer 0 completed

Choose how many copies are
required and create them (k copies
create a polynomial of degree k)

Choose the number of qubits for
layer 1

Use multi-control gates to control the
variational layers in layer 0 and its
copies

Choose a variational layer for layer 1

Choose a measurement strategy for
layer 1

Layer 1 completed

Continue this for as many layers as
needed

SPQC Created

Fig. 16

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NIKHIL KHATRI ET AL: "Quixer: A Quantum Transformer Model", ARXIV.ORG, CORNELL UNIVERSITY LIBRARY, 201 OLIN LIBRARY CORNELL UNIVERSITY ITHACA, NY 14853, 6 June 2024 (2024-06-06), XP091779530, * Section 1; figure 1 * * Sections 2.2 to 3.4 * * Sections 4 and 5 * | 1-15 | INV. G06N10/60 |
| A | Heredge Jamie ET AL: "Non-Unitary Quantum Machine Learning", arXiv.org, 27 May 2024 (2024-05-27), XP093268360, Retrieved from the Internet: URL:https://arxiv.org/pdf/2405.17388v1 [retrieved on 2025-04-08] * Sections 1.4, 2, 4.2 * | 1-15 | |
| A | US 2024/160986 A1 (KORDZANGANEH MOHAMMAD [CH] ET AL) 16 May 2024 (2024-05-16) * paragraph [0035] - paragraph [0072]; figures 1-7 * | 1-15 | TECHNICAL FIELDS SEARCHED (IPC) G06N |
| A | STEFANO MANGINI ET AL: "Quantum computing model of an artificial neuron with continuously valued input data", ARXIV.ORG, CORNELL UNIVERSITY LIBRARY, 201 OLIN LIBRARY CORNELL UNIVERSITY ITHACA, NY 14853, 28 July 2020 (2020-07-28), XP081886741, DOI: 10.1088/2632-2153/ABAF98 * Sections II-IV * | 1-15 | |

The present search report has been drawn up for all claims

| Place of search | Date of completion of the search | Examiner |
|---|---|---|
| The Hague | 9 April 2025 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................................
& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 20 8364

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2025

| Patent document cited in search report | Publication date | Patent family member(s) | | Publication date |
|---|---|---|---|---|
| US 2024160986 A1 | 16-05-2024 | AU | 2023258314 A1 | 06-06-2024 |
| | | CA | 3218749 A1 | 10-05-2024 |
| | | CN | 118014096 A | 10-05-2024 |
| | | EP | 4369260 A1 | 15-05-2024 |
| | | JP | 2024070242 A | 22-05-2024 |
| | | KR | 20240068550 A | 17-05-2024 |
| | | US | 2024160986 A1 | 16-05-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHULD, M. et al.** Supervised quantum machine learning models are kernel methods. *arXiv preprint arXiv.2101.11020*, 2021

- **WIEBE et al.** Floating point representations in quantum circuit synthesis. *New Journal of Physics*, vol. 15